# EUROPEAN PATENT APPLICATION

(11) **EP 4 631 596 A1**
(43) Date of publication of application: **15.10.2025**
(21) Application number: 25181366.3
(22) Date of filing: 04.08.2022
(51) Int. Cl.: B01D 29/11, B01D 29/60, B01D 35/143

(54) **FILTER DEVICES AND CONTAMINATION PROMPT STRUCTURES**

(30) Priority: 04.08.2021 CN 202121809837 U; 14.01.2022 CN 202210043321; 14.01.2022 CN 202220104946 U
(62) Divisional of application: 22753795.8
(71) Applicant: Intex Marketing Ltd., Road Town, Tortola 1110 (VG)
(72) Inventor: HUANG, Zhi Xiong, Xiamen, 361022 (CN); ZHANG, Ying Biao, Xiamen, 361022 (CN); LIN, Zheng Wen, Xiamen, 361022 (CN)
(74) Representative: Reddie & Grose LLP

(57) **Abstract**

A contamination prompt structure for a filter medium may comprise a filter element and a prompt assembly. The prompt assembly may have a movable part. One end of the movable part may be in communication with one of a water inlet of the filter element, or a water outlet of the filter element, and the other end of the movable part may be in communication with the other one of the water inlet of the filter element, the water outlet of the filter element, or outside air. When the filter element is in a contaminated state, a rise of pressure at the water inlet or a drop of pressure at the water outlet may drive the movable part to move to send a prompt for a user to replace the filter element.

## Description

### RELATED APPLICATIONS

This application is related to Chinese patent application number 202210043321.4, filed on January 14, 2022; Chinese utility model patent application number 202121809837.2, filed on August 4, 2021; and Chinese utility patent application number 20220104946.2 filed January 14, 2022, the entire disclosures of which are expressly incorporated herein by reference.

### FIELD OF THE DISCLOSURE

The present disclosure relates to a water treatment or process device, and in particular to a filter device.

### BACKGROUND OF THE DISCLOSURE

A water purifier can filter out harmful substances and purify water in a swimming pool. This filtering work is completed by the filter element of the water purifier. The filter element has a service life and needs to be replaced.

A conventional water purifier filter is disclosed in Chinese patent publication number CN208757088U and includes an indicator for a state of a water purifier filter element. The disclosed water purification water supply system, including: a fixed structure, a status indicator light, and a signal line. In other current traditional water purification filtration devices, the prompts for replacing the filter media are mostly the following two kind of methods. The user regularly disassembles and checks a contaminated condition of the filter medium which is troublesome to operate and the precision is not high. The user is reminded to replace the filter medium by a pressure gauge or a pressure sensor which has high precision, but increased cost.

If the filter has not been replaced for a long time, it may cause the filter to be blocked due to excessive impurities on the filter, which will eventually cause the filter to be damaged. Therefore, the user needs to be reminded when the filter is clogged or the filter device is functioning abnormally.

### SUMMARY OF THE DISCLOSURE

An exemplary embodiment of the present disclosure provides a contamination prompt structure for a filter medium, which is low in cost and convenient to use.

In another exemplary embodiment of the present disclosure, a contamination prompt structure for a filter medium is provided. The contamination prompt structure comprises a filter element, and a prompt assembly. The prompt assembly has a movable part. One end of the movable part is in communication with a water inlet of the filter element or a water outlet of the filter element. The other end of the movable part is in communication with the other one of the water inlet of the filter element and the water outlet of the filter element, or outside air. When the filter element is in a contaminated state, a rise of pressure at the water inlet or a drop of pressure at the water outlet drives the movable part to move to send a prompt for a user to replace the filter element.

In an example thereof, the prompt assembly comprises a housing, an elastic body, a valve core, and an elastic bladder. The valve core is disposed at a movable end of the elastic bladder to form the movable part. One side of the elastic bladder facing away from the movable end of the elastic bladder is in communication with the water inlet of the filter element. The elastic bladder and the valve are disposed in the housing. One end of the elastic body is fixedly connected to an inner wall of the housing. The other end of the elastic body abuts the movable end of the elastic bladder. The housing further comprises an exhaust hole in communication with the outside air.

In another example thereof, the prompt assembly comprises a housing, a valve core, and an elastic body. The valve core is movably disposed in the housing to form the movable part. One side of the valve core is in communication with the water inlet of the filter element. The other side of the valve core is in contact with one end of the elastic body. The other end of the elastic body is fixedly connected to an inner wall of the housing.

In a further example thereof, the prompt assembly comprises a housing, a valve core, and an elastic bladder. The valve core is disposed at a movable end of the elastic bladder to form the movable part. One side of the elastic bladder facing away from the movable end of the elastic bladder is in communication with the water inlet of the filter element. The elastic bladder and the valve core are disposed in the housing. One end of the elastic body is fixedly connected to an inner wall of the housing. The other end of the elastic body abuts the movable end of the elastic bladder. One side of the valve core facing away from the elastic bladder is in communication with the water outlet of the filter element through a water inlet hole on the housing.

In yet another example thereof, the prompt assembly comprises a housing, a valve core, and an elastic body. The valve core is movably disposed in the housing to form the movable part. One side of the valve core is in communication with the water inlet and abuts one end of the elastic body. The other end of the elastic body is fixedly connected to an inner wall of the housing. One side of the valve core is in communication with the water outlet through a water inlet hole on the housing.

In still another example thereof, the housing is disposed with an observation window for observing a position of the valve core.

In yet still another example thereof, the prompt assembly comprises a housing, a valve core and an elastic body. The valve core is disposed at a movable end of the elastic body to form the movable part. One side of the elastic body facing away from the movable end is in communication with the water inlet. The elastic body and the valve core are disposed in the housing. One side of the valve core facing away from the elastic body is in communication with the water outlet through a water inlet hole on the housing. The housing is disposed with an indication sticker. The valve core covers the indication sticker with different areas when the valve core is located in different positions.

In a further yet example thereof, the prompt assembly comprises a housing, a valve core, and an elastic body. The valve core is disposed at a movable end of the elastic body to form the movable part. One side of the elastic body facing away from the movable end is in communication with the water inlet. The elastic body and the valve core are disposed in the housing. One side of the valve core facing away from the elastic body is in communication with the water outlet through a water inlet hole on the housing. The valve core is disposed with a magnet. The housing is disposed with a circuit board. The circuit board is configured to judge a position of the valve core to send a prompt signal based on a relative position between the magnet and the circuit board. In a variation thereof, the prompt signal is a light signal, a sound signal or an APP prompt signal of a smart terminal.

In a further still example thereof, the prompt assembly comprises a pulling rod, a convex shell, and a housing. The convex shell is swingingly connected to the pulling rod at an eccentric position. The housing has an observation window for observing a position of the convex shell. When the filter element is in the contaminated state, two ends of the pulling rod move along an axial direction of the pulling rod due to a rise of pressure at the water inlet or a drop of pressure at the water outlet to pull the convex shell to swing. In a variation thereof, the convex shell comprises a first protruding column located at the eccentric position. The pulling rod comprises a buckle slot configured to mate with the first protruding column. The buckle slot extends along a direction perpendicular to the axial direction of the pulling rod. The convex shell further comprises a second protruding column located at an axis of the convex shell. The pulling rod comprises a position-providing groove along the axial direction of the pulling rod. When the convex shell swings the second protruding column moves in the position-providing groove and the first protruding column moves in the buckle slot. In another variation thereof, the pulling rod is connected with a reset elastic member. When the two ends of the pulling rod move along the axial direction of the pulling rod due to the rise of the pressure at the water inlet or the drop of the pressure at the water outlet, the reset elastic member is squeezed to generate elastic reset force.

In yet a further example thereof, the prompt assembly comprises a pulling rod, a dial, and a housing. The housing has an observation window for observing a relative position between the dial and the housing. The pulling rod and the dial are connected by a direction-changing member. The direction-changing member enables a translation of the pulling rod along an axial direction of the pulling rod to be changed to a rotation of the dial around an axis of the dial. When the filter element is in the contaminated state, two ends of the pulling rod move along the axial direction of the pulling rod due to a rise of pressure at the water inlet or a drop of pressure at the water outlet to drive the dial to rotate In a variation thereof, the dial has a cylinder that is operatively coupled to pulling rod. The direction-changing member comprises a spiral guide rail disposed on the cylinder and a slider disposed on the pulling rod. The slider is operatively coupled to the spiral guide rail. In another variation thereof, the pulling rod is connected with a reset elastic member. When the two ends of the pulling rod move along the axial direction of the pulling rod due to the rise of the pressure at the water inlet or the drop of the pressure at the water outlet, the reset elastic member is squeezed to generate elastic reset force.

In yet a further still example thereof, the prompt assembly comprises a diaphragm, a flow switch, a circuit board, and a valve stem. One end of the valve stem is operatively coupled to a convex surface of the diaphragm. The flow switch is fixedly connected to the valve stem. The circuit board comprises a Hall element. When the filter element is in the contaminated state, the convex surface of the diaphragm is flattened due to a rise of pressure at the water inlet or a drop of pressure at the water outlet to drive the valve stem and the flow switch to move relative to the circuit board, so as to make the flow switch cooperate with the Hall element.

In still a further example thereof, the prompt assembly comprises a micro switch, a valve stem, and a reset elastic member. One end of the valve stem is operatively coupled to the reset elastic member. The other end of the valve stem is configured to cooperate with the micro switch. When the filter element is in the contaminated state, the reset elastic member is squeezed to drive the valve stem to move to a second position due to a rise of pressure at the water inlet or a drop of pressure at the water outlet, so as to make the other end of the valve stem trigger the micro switch.

In still another exemplary embodiment of the present disclosure, a filter device is disposed with a contamination prompt structure for a filter medium. In a variation thereof, the prompt assembly is located outside of the filter device. One end of the prompt assembly is in communication with a water inlet port of the filter device. The other end of the prompt assembly is connected to a water outlet of the filter device, optionally through a flexible hose. In another variation thereof, the prompt assembly is disposed in the filter device and is located below the filter element.

In still a further exemplary embodiment of the present disclosure, a filter device having a replaceable filter element is provided. The filter device comprising a housing having an interior adapted to receive the replaceable filter element, a water inlet in fluid communication with the interior, and a water outlet in fluid communication with the interior. The replaceable filter element being positionable in the interior so that water received through the water inlet of the housing passes through the replaceable filter element to reach the water outlet of the housing. The filter device further comprising a prompt assembly having a movable part. One end of the movable part is in fluid communication with one of the water inlet and the water outlet and the other end of the movable part is in fluid communication with the other one of the water inlet and the water outlet or outside air. The movable part provides an indication of a condition of the replaceable filter element.

In an example thereof, the prompt assembly comprises a prompt housing, an elastic body, a valve core, and an elastic bladder. The valve core is disposed at a movable end of the elastic bladder to form the movable part. One side of the elastic bladder facing away from the movable end of the elastic bladder is in communication with the water inlet. The elastic bladder and the valve are disposed in the prompt housing. One end of the elastic body is fixedly connected to an inner wall of the prompt housing. The other end of the elastic body abuts the movable end of the elastic bladder. The prompt housing further comprises an exhaust hole in communication with the outside air.

In another example thereof, the prompt assembly comprises a prompt housing, a valve core, and an elastic body. The valve core is movably disposed in the prompt housing to form the movable part. One side of the valve core is in communication with the water inlet. The other side of the valve core is in contact with one end of the elastic body. The other end of the elastic body is fixedly connected to an inner wall of the prompt housing.

In yet another example thereof, the prompt assembly comprises a prompt housing, a valve core, and an elastic bladder. The valve core is disposed at a movable end of the elastic bladder to form the movable part. One side of the elastic bladder facing away from the movable end of the elastic bladder is in communication with the water inlet. The elastic bladder and the valve core are disposed in the prompt housing. One end of the elastic body is fixedly connected to an inner wall of the prompt housing. The other end of the elastic body abuts the movable end of the elastic bladder. One side of the valve core facing away from the elastic bladder is in communication with the water outlet through a water inlet hole on the prompt housing.

In still another example thereof, the prompt assembly comprises a prompt housing, a valve core, and an elastic body. The valve core is movably disposed in the prompt housing to form the movable part. One side of the valve core is in communication with the water inlet and abuts one end of the elastic body. The other end of the elastic body is fixedly connected to an inner wall of the prompt housing. One side of the valve core is in communication with the water outlet through a water inlet hole on the housing.

In another example thereof, the prompt housing is disposed with an observation window for observing a position of the valve core.

In yet another example thereof, the prompt assembly comprises a prompt housing, a valve core and an elastic body. The valve core is disposed at a movable end of the elastic body to form the movable part. One side of the elastic body facing away from the movable end is in communication with the water inlet. The elastic body and the valve core are disposed in the prompt housing. One side of the valve core facing away from the elastic body is in communication with the water outlet through a water inlet hole on the prompt housing. The prompt housing is disposed with an indication sticker. The valve core covers the indication sticker with different areas when the valve core is located in different positions.

In still a further example thereof, the prompt assembly comprises a prompt housing, a valve core, and an elastic body. The valve core is disposed at a movable end of the elastic body to form the movable part. One side of the elastic body facing away from the movable end is in communication with the water inlet. The elastic body and the valve core are disposed in the prompt housing. One side of the valve core facing away from the elastic body is in communication with the water outlet through a water inlet hole on the prompt housing. The valve core is disposed with a magnet. The prompt housing is disposed with a circuit board. The circuit board is configured to judge a position of the valve core to send a prompt signal based on a relative position between the magnet and the circuit board.

In yet a further example thereof, the prompt assembly comprises a pulling rod, a convex shell, and a prompt housing. The convex shell is swingingly connected to the pulling rod at an eccentric position. The prompt housing has an observation window for observing a position of the convex shell. The pulling rod moves along an axial direction of the pulling rod causing the convex shell to rotate. In a variation thereof, the convex shell comprises a first protruding column located at the eccentric position. The pulling rod comprises a buckle slot configured to mate with the first protruding column. The buckle slot extends along a direction perpendicular to the axial direction of the pulling rod. The convex shell further comprises a second protruding column located at an axis of the convex shell. The pulling rod comprises a position-providing groove along the axial direction of the pulling rod. When the convex shell rotates the second protruding column moves in the position-providing groove and the first protruding column moves in the buckle slot. In another variation thereof, the pulling rod is connected with a reset elastic member. When the pulling rod move along the axial direction of the pulling rod due to the rise of the pressure at the water inlet or the drop of the pressure at the water outlet, the reset elastic member is squeezed to generate elastic reset force.

In still yet a further example thereof, the prompt assembly comprises a pulling rod, a dial, and a prompt housing. The prompt housing has an observation window for observing a relative position between the dial and the prompt housing. The pulling rod and the dial are connected by a direction-changing member. The direction-changing member enables a translation of the pulling rod along an axial direction of the pulling rod to be changed to a rotation of the dial around an axis of the dial. The pulling rod moves along the axial direction of the pulling rod due to drive the dial to rotate. In a variation thereof, the dial has a cylinder that is operatively coupled to pulling rod. The direction-changing member comprises a spiral guide rail disposed on the cylinder and a slider disposed on the pulling rod. The slider is operatively coupled to the spiral guide rail. In another variation thereof, the pulling rod is connected with a reset elastic member. When the pulling rod moves along the axial direction of the pulling rod due to the rise of the pressure at the water inlet or the drop of the pressure at the water outlet, the reset elastic member is squeezed to generate elastic reset force.

In yet still a further example thereof, the prompt assembly comprises a diaphragm, a flow switch, a circuit board, and a valve stem. One end of the valve stem is operatively coupled to a convex surface of the diaphragm. The flow switch is fixedly connected to the valve stem. The circuit board comprises a Hall element. The convex surface of the diaphragm is flattened due to a rise of pressure at the water inlet or a drop of pressure at the water outlet to drive the valve stem and the flow switch to move relative to the circuit board, so as to make the flow switch cooperate with the Hall element.

In another still example thereof, the prompt assembly comprises a micro switch, a valve stem, and a reset elastic member. One end of the valve stem is operatively coupled to the reset elastic member. The other end of the valve stem is configured to cooperate with the micro switch. The reset elastic member is squeezed to drive the valve stem to move to a second position due to a rise of pressure at the water inlet or a drop of pressure at the water outlet, so as to make the other end of the valve stem trigger the micro switch.

In an additional example thereof, the prompt assembly is located outside of the filter device.

In still yet an additional example thereof, the prompt assembly is disposed in the filter device and is located below the filter element.

Embodiments of the present disclosure may provide the following advantages among others.

1. Embodiments of the present disclosure may provide the contamination prompt structure for the filter medium. By setting up a movable assembly, the movable assembly may be placed in different positions before the filter element is in a contaminated state and after the filter element is in the contaminated state by utilizing the characteristic that the rise of the pressure at the water inlet. The user may judge whether the filter element is in the contaminated state and needs to be replaced by observing the position of the movable assembly, which is very intuitive and the cost is very low.

2. Embodiments of the present disclosure may provide the contamination prompt structure for the filter medium. By utilizing the characteristic that the movable assembly may be in different positions before and after the filter element is in the contaminated state, an indicator sticker or an induction circuit may be set, so as to further facilitate the user to perceive that the filter element is dirty and needs to be replaced.

### BRIEF DESCRIPTION OF THE DRAWINGS

The foregoing aspects and many of the intended advantages of this disclosure will become more readily appreciated as the same becomes better understood by reference to the following detailed description when taken in conjunction with the accompanying drawings.
FIG. 1 illustrates a cross-sectional view of an exemplary filter device of the present disclosure;
FIG. 1A is a detail view of a portion of the filter device of FIG. 1 including a prompt assembly;
FIG. 2 illustrates an exploded view of the prompt assembly of the exemplary filter device of FIG. 1;
FIG. 3 illustrates a cross-sectional view of another exemplary filter device of the present disclosure;
FIG. 3A is a detail view of a portion of the filter device of FIG. 3 including a prompt assembly;
FIG. 4 illustrates an exploded view of the prompt assembly of the exemplary filter device of FIG. 3A;
FIG. 5 illustrates a cross-sectional view of yet another exemplary filter device of the present disclosure;
FIG. 5A is a detail view of a portion of the filter device of FIG. 5 including a prompt assembly;
FIG. 6 illustrates an exploded view of the prompt assembly of the exemplary filter device of FIG. 5A;
FIG. 7 illustrates a cross-sectional view of still another exemplary filter device of the present disclosure;
FIG. 7A is a detail view of a portion of the filter device of FIG. 7 including a prompt assembly;
FIG. 8 illustrates an exploded view of the prompt assembly of the exemplary filter device of FIG. 7A;
FIG. 9 illustrates a cross-sectional view of a further exemplary filter device of the present disclosure;
FIG. 9A is a detail view of a portion of the filter device of FIG. 9 including a prompt assembly;
FIG. 10 illustrates an exploded view of the prompt assembly of the exemplary filter device of FIG. 9A;
FIG. 11 illustrates a cross-sectional view of a further yet exemplary filter device of the present disclosure;
FIG. 11A is a detail view of a portion of the filter device of FIG. 11 including a prompt assembly;
FIG. 12 illustrates an exploded view of the prompt assembly of the exemplary filter device of FIG. 11A;
FIG. 13 illustrates a cross-sectional view of a further still exemplary filter device of the present disclosure;
FIG. 14 illustrates an exploded view of a prompt assembly of the exemplary filter device of FIG. 13;
FIGS. 15 and 15A illustrates cross-sectional views of the prompt assembly of the exemplary filter device of FIG. 13 before (FIG. 15) and after (FIG. 15A) a filter element is in a contaminated state.
FIG. 16 illustrates a cross-sectional view of yet still another exemplary filter device of the present disclosure;
FIG. 17 illustrates an exploded view of a prompt assembly of the exemplary filter device of FIG. 16;
FIG. 18 illustrates a dial of the prompt assembly the exemplary filter device of FIG. 16;
FIG. 18A illustrates an assembled view of the prompt assembly of the exemplary filter device of FIG. 16;
FIG. 19 illustrates an exploded view of a further exemplary prompt assembly of the present disclosure;
FIG. 20 illustrates a cross-sectional view of the prompt assembly of FIG. 19 before a filter element is in a contaminated state;
FIG. 21 illustrates a cross-sectional view of the prompt assembly of FIG. 19 after the filter element is in the contaminated state;
FIG. 22 illustrates an exploded view of yet a further exemplary prompt assembly of the present disclosure;
FIG. 23 illustrates a cross-sectional view of the prompt assembly of FIG. 22 before a filter element is in a contaminated state;
FIG. 24 illustrates a cross-sectional view of the prompt assembly of FIG. 22 after the filter element is in the contaminated state;
FIG. 25 illustrates an exploded view of still a further exemplary prompt assembly of the present disclosure;
FIG. 26 illustrates a cross-sectional view of the prompt assembly of FIG. 25 before a filter element is in a contaminated state;
FIG. 27 illustrates a cross-sectional view of the prompt assembly of FIG. 25 after the filter element is in the contaminated state;
FIG. 28 illustrates an exploded view of a further still exemplary prompt assembly of the present disclosure;
FIG. 29 illustrates a cross-sectional view of the prompt assembly of FIG. 28 before a filter element is in a contaminated state;
FIG. 30 illustrates a state diagram of the prompt assembly of FIG. 28 before the filter element is in the contaminated state;
FIG. 31 illustrates a cross-sectional view of the prompt assembly FIG. 28after the filter element is in the contaminated state; and
FIG. 32 illustrates a state diagram of the prompt assembly of FIG. 28 after the filter element is in the contaminated state.

Corresponding reference characters indicate corresponding parts throughout the several views. Although the drawings represent embodiments of various features and components according to the present disclosure, the drawings are not necessarily to scale and certain features may be exaggerated in order to better illustrate and explain the present disclosure. The exemplifications set out herein illustrate embodiments of the disclosure, and such exemplifications are not to be construed as limiting the scope of the disclosure in any manner.

### DETAILED DESCRIPTION OF THE DRAWINGS

For the purposes of promoting an understanding of the principals of the disclosure, reference will now be made to the embodiments illustrated in the drawings, which are described below. The embodiments disclosed below are not intended to be exhaustive or limit the disclosure to the precise form disclosed in the following detailed description. Rather, the embodiments are chosen and described so that others skilled in the art may utilize their teachings. It will be understood that no limitation of the scope of the disclosure is thereby intended. The disclosure includes any alterations and further modifications in the illustrative devices and described methods and further applications of the principles of the disclosure which would normally occur to one skilled in the art to which the disclosure relates.

In the description of the present disclosure, it should be noted that the terms "upper", "lower", "inner", "outer", "top/bottom", etc. indicate the orientation or positional relationship based on the orientation shown in the drawings. The positional relationship is only for the convenience of describing the present disclosure and simplifying the description, rather than indicating or implying that the referenced device or element must have a specific orientation, be constructed, and be operated in a specific orientation. Therefore, the positional relationship should not be understood as a limitation of the present disclosure. In addition, the terms "first" and "second" are only used for descriptive purposes and should not be understood as indicating or implying relative importance.

In the description of the present disclosure, it should be noted that the terms "installed", "provided with", "sleeved/connected", "connected", etc., should be understood broadly. For example, "connected" can be a fixed connection, a detachable connection, or an integral connection, a mechanical connection, an electrical connection, a direct connection, or an indirect connection through an intermediate medium, and it can be a connection between two members. For those of ordinary skill in the art, the specific meaning of the above terms in the present disclosure can be understood under specific conditions. The terms "couples", "coupled", "coupler", and variations thereof are used to include both arrangements wherein two or more components are in direct physical contact and arrangements wherein the two or more components are not in direct contact with each other (e.g., the components are "coupled" via at least a third component, but yet still cooperates or interact with each other).

### Contamination Prompt Structures for Filter Devices

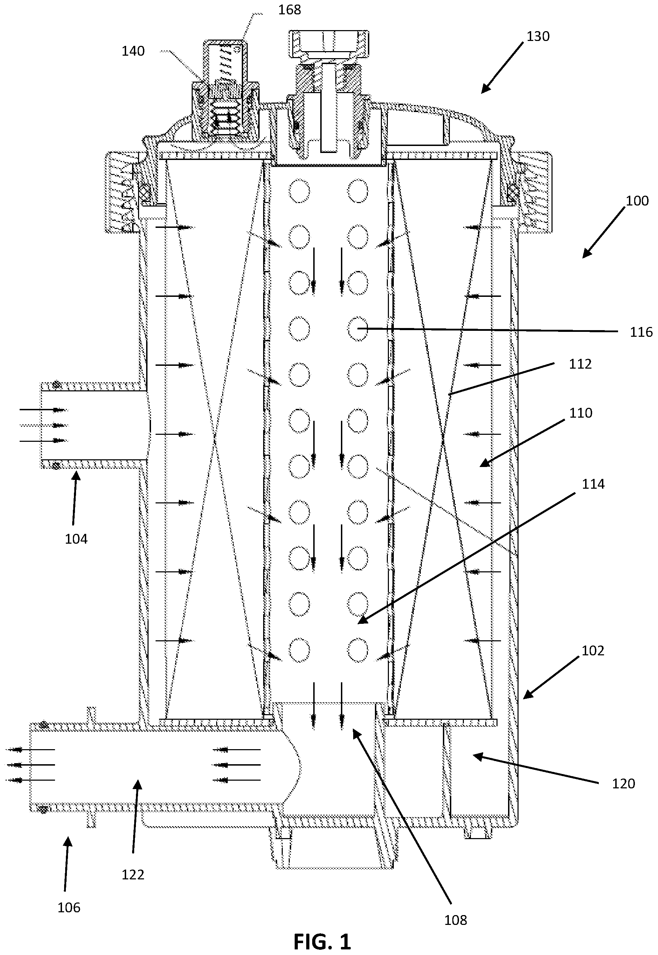

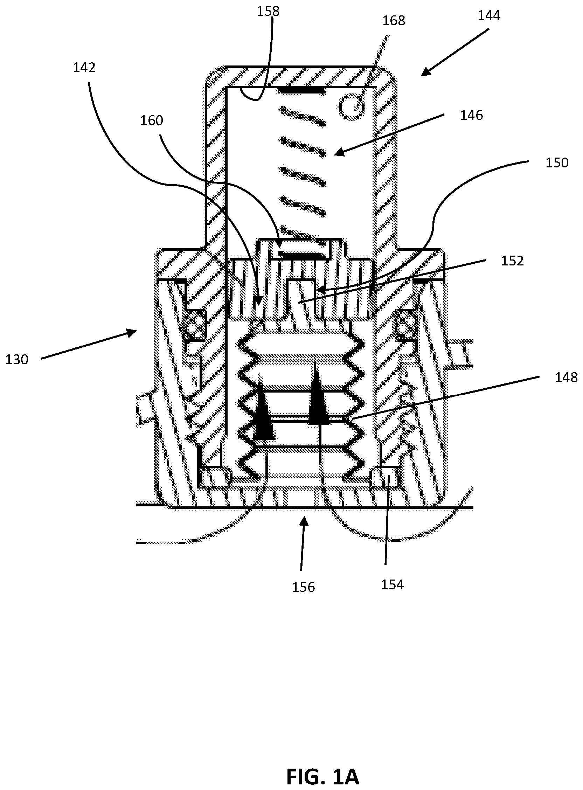

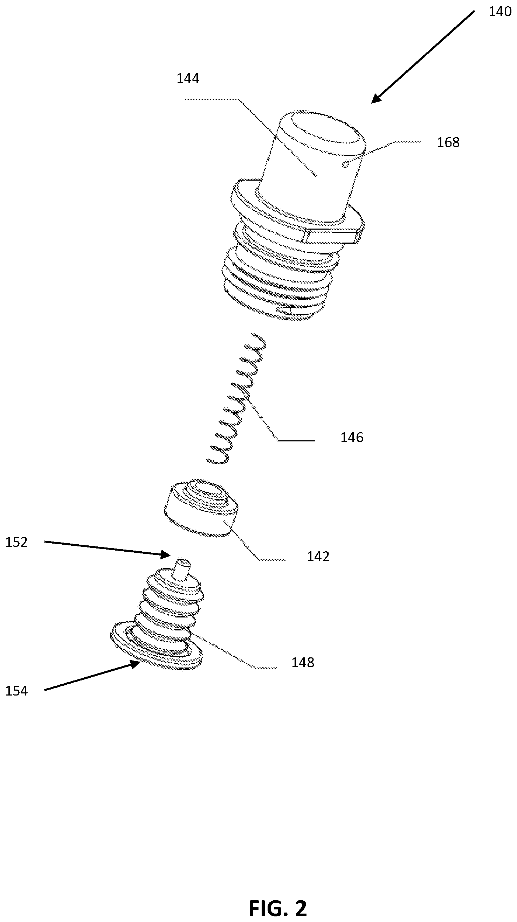

Referring to FIGS. 1, 1A, and 2, an exemplary filter device 100 is shown having an exemplary containment prompt structure 140. Filter device 100 includes a base housing 102 having a fluid inlet 104 and a fluid outlet 106. Each of fluid inlet 104 and fluid outlet 106 are in fluid communication with an interior 108 of base housing 102. Further, each of fluid inlet 104 and fluid outlet 106 may be coupled to a swimming pool, spa, or other suitable fluid reservoir having fluid to be cleaned. Exemplary fluids include water.

A filter element 110 is received in interior 108 of base housing 102. Filter element 110 is illustratively shown to include a filter media 112 which surrounds a central core 114 having openings 116 therein. Fluid received in interior 108 from fluid inlet 104 flows around the outside perimeter of filter element 110, through filter media 112, and through openings 116 into an interior of central core 114. As illustrated in FIG. 1, filter element 110 is supported on a support 120 of base housing 102 and an inlet of fluid outlet 106 is received in the interior of central core 114 of filter element 110. Fluid entering the interior of central core 114 passing into the passageway 122 of fluid outlet 106 and exits filter device 100. Other arrangements of filter element 110 and filter device 100 are possible as long as fluid entering filter device 100 through fluid inlet 104 passes through filter element 110 prior to exiting fluid outlet 106. A cover 130 is coupled to base housing 102 to bound interior 108 of filter device 100.

As shown in FIG. 1, a contamination prompt structure 140 is supported by base housing 102 and coupled to cover 130. In other embodiments, containment prompt structure 140 is coupled to base housing 102. Referring to FIG. 2, containment prompt structure 140 has a movable part, illustratively a valve core 142. One end of the movable part is fluidly connected to a water inlet of the filter element 110 (the portion of interior 108 of filter device 100 surrounding filter element 110), and the other end of the movable part is fluidly connected to outside air outside of filter device 100.

When the filter element 110 is in a contaminated state, a filtering capacity of the filter element 110 decreases, pressure at the water inlet of the filter element 110 rises, and the pressure at the water inlet of the filter element 110 is greater than air pressure to drive the movable part, the valve core 142, to move, thereby changing a position of the valve core 142. A user only needs to observe the position of the movable part, the valve core 142, to know whether the filter element 110 needs to be replaced due to contamination. The whole process is very intuitive and the cost of the solution is very low.

In the illustrated embodiment, containment prompt structure 140 comprises valve core 142, a housing 144, an elastic body 146, and an elastic bladder 148. A lower flange 154 of elastic bladder 148 is captured between housing 144 and cover 130 when housing 144 is screwed onto cover 130 (see FIG. 1A). A seal 149 seals housing 144 to cover 130. Valve core 142 is disposed at a movable end of the elastic bladder 148 to form the movable part. Referring to FIG. 1A, valve core 142 includes a recess 150 which receives a protrusion 152 of elastic bladder 148. A bottom side of the elastic bladder 148 proximate lower flange 154 and facing away from the movable end of the elastic bladder 148 is in communication with interior 108 of filter device 100 through opening 156, the water inlet of the filter element 110. The elastic bladder 148 and the valve core 142 are disposed in the housing 144. One end of the elastic body 146 is fixedly connected to an inner wall 158 of the housing 144, and the other end of the elastic body 146 is received in a recess 160 of valve core 142 and abuts valve core 142. Housing 144 further comprises an exhaust hole 168 in communication with the outside air.

When the filter element 110 is in the contaminated state, the filtering capacity of the filter element 110 decreases, the pressure at the water inlet of the filter element 110 rises, and a pressure difference is defined between two ends of elastic bladder 148 which pushes the valve core 142 to move upward to pressure air in the housing 144, and part of the air is discharged through the exhaust hole 168. In this way, the valve core 142 can move correspondingly, and the user can intuitively find that a position of the valve core 142 has changed either due to housing 144 having an opening or window therein or being made of an optically translucent material. When the valve core 142 moves, the elastic body 146 is squeezed to generate elastic restoring force. When the filter element 110 has been replaced by the user, the pressure at the inlet end of the filter element 110 decreases, and the valve core 142 will return to an initial position due to the elastic restoring force.

In this embodiment, in order to facilitate the user to observe the position of the valve core 142, the housing 144 is disposed with a transparent observation window, and the user can easily observe the position of the valve core 142 through the observation window.

In the embodiment of FIGS. 1 and 2, the valve core 142 is driven to move by a rise of the pressure at the water inlet of the filter element 110. The prompt structure or assembly 140 may also be installed at a water outlet of the filter element, and the valve core 142 may be driven to move by utilizing a characteristic that a flow rate of the water outlet end of the filter element 110 decreases after the valve core 142 is contaminated to cause the pressure at the water outlet of the filter element 110 to decrease.

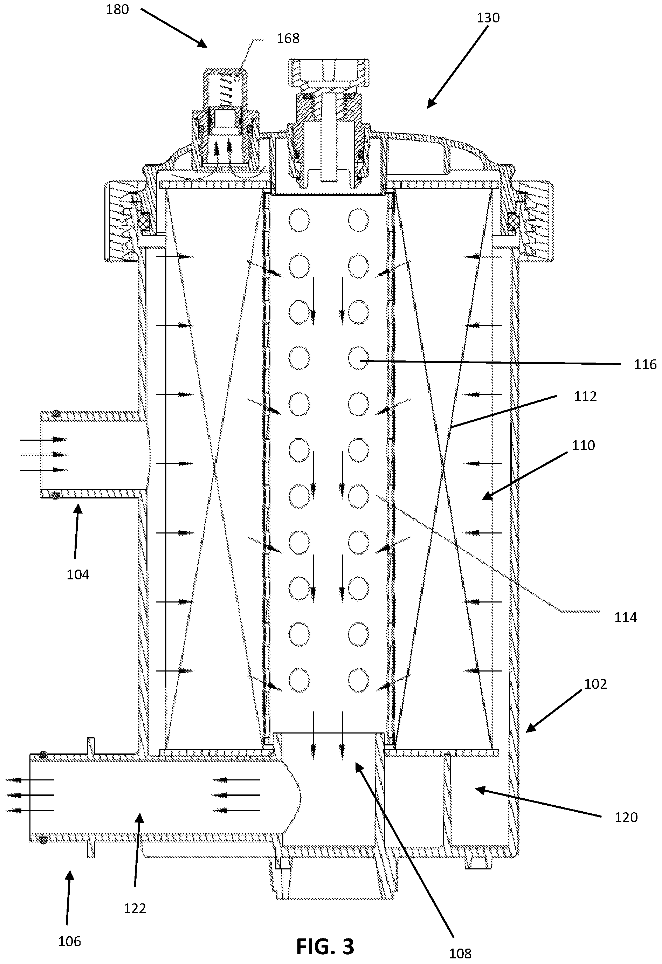

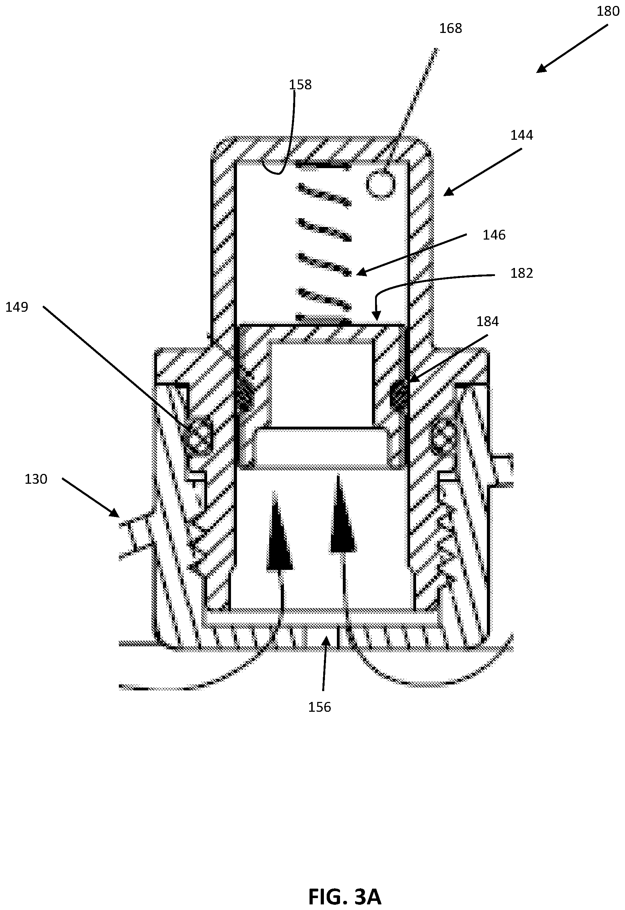

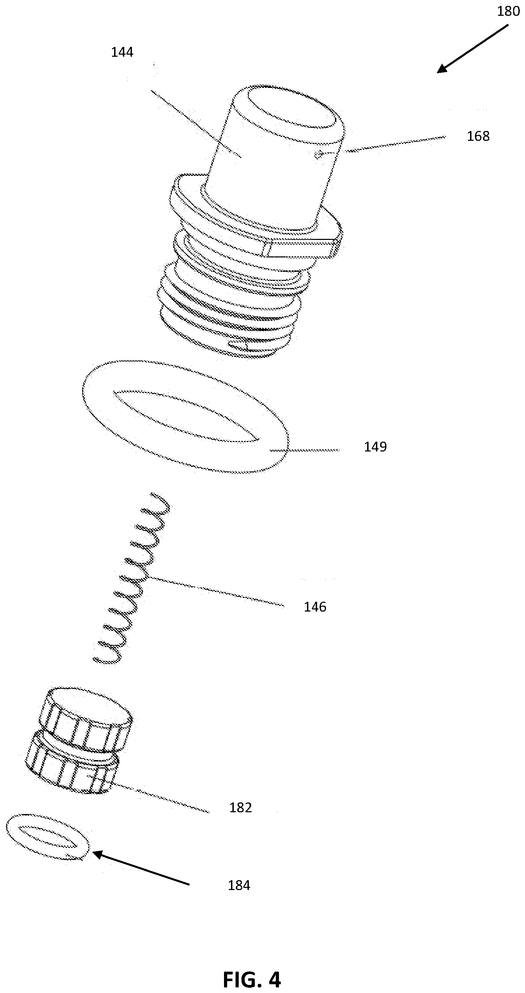

Referring to FIGS. 3, 3A, and 4, another exemplary prompt structure 180 is shown. Prompt assembly 180 includes housing 144, a valve core 182, and an elastic body 146. Valve core 182 is movably disposed in the housing 144 to form the movable part. One side of the valve core 182 is in communication with the water inlet of the filter element 110 through opening 156 in cover 130, and the other side of the valve core 182 is in contact with one end of the elastic body 146. The other end of the elastic body 146 is fixedly connected to inner wall 158 of the housing 144. A seal 186 is carried by valve core 182 to separate the water inlet of filter device 100 and the outside air through exhaust hole 168.

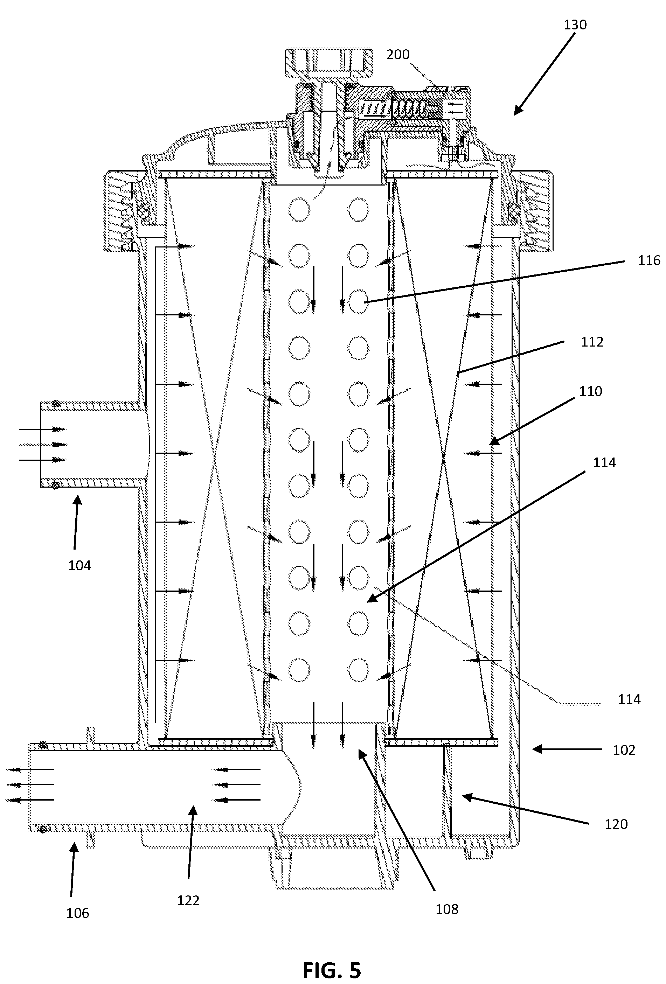

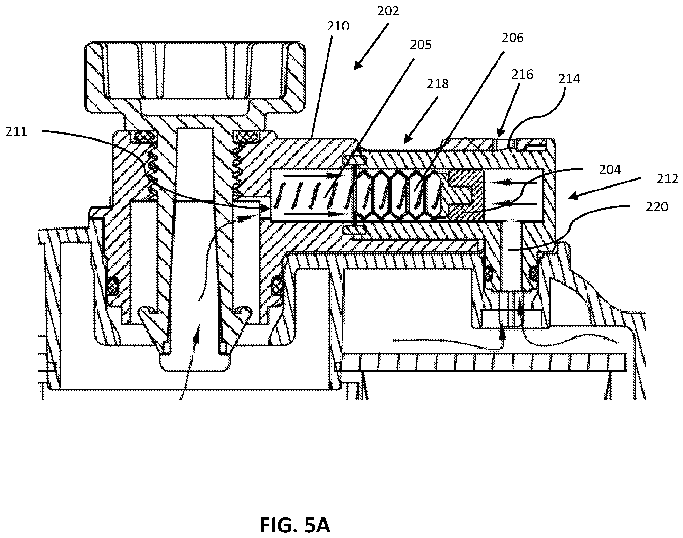

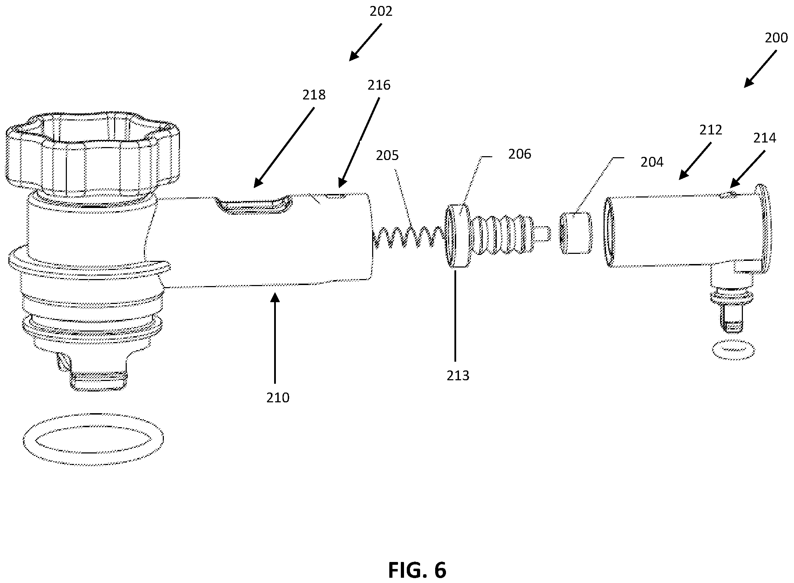

Referring to FIGS. 5, 5A, and 6, another exemplary prompt assembly 200 comprises a housing 202, a valve core 204, an elastic body 205, and an elastic bladder 206. Housing 202 includes a first housing portion 210 and a second housing portion 212. Housing portion 212 is received in an open end of housing portion 210 and a flange 213 of elastic bladder 206 is captured between second housing portion 212 and first housing portion 210. A tab 214 on second housing portion 212 is received in an opening 216 of first housing portion 210 to secure second housing portion 212 to first housing portion 210. Housing portion 210 further includes a window 218through which second housing portion 212 is visible. In embodiments, second housing portion 212 is optically translucent so an operator may visually see a position of valve core 204 from an exterior of filter device 100.

Valve core 204 is disposed at a movable end of the elastic bladder 206 to form the movable part. A side of valve core 204 facing away from the movable end of elastic bladder 206 is in communication with the water inlet of the filter element 110 through an opening 220 of second housing portion 212. The elastic bladder 206 and the valve core 204 are disposed in the housing 202.

One end of the elastic body 205 is fixedly connected to an inner wall of the housing portion 210 and the other end of the elastic body 205 abuts the movable end of the elastic bladder 206. A side of the elastic bladder 206 facing away from the valve core 204 is in communication with the water outlet of the filter element 110 through an opening 211 on first housing portion 210.

In this embodiment, the prompt assembly 200 is disposed between the water inlet and the water outlet, and a pressure difference is formed by utilizing a characteristic that pressure at the water inlet rises and pressure at the water outlet decreases when filter device 100 is contaminated moving valve core 204 to the left in FIG. 5A towards the water outlet against the bias of elastic body 205. Advantages of prompt assembly 200, among others, are the pressure difference is more obvious and the sensitivity is also higher.

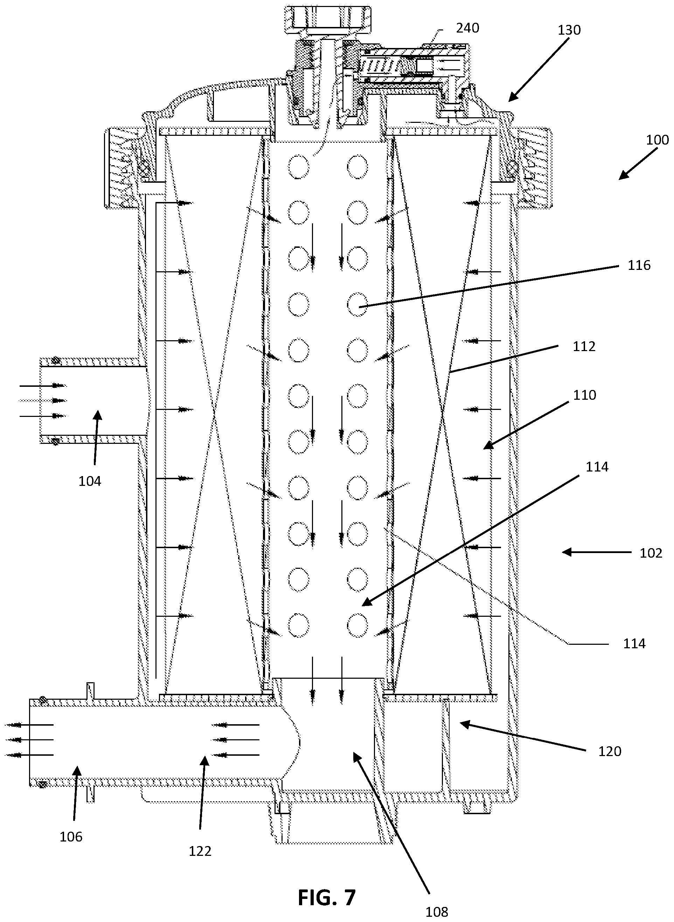

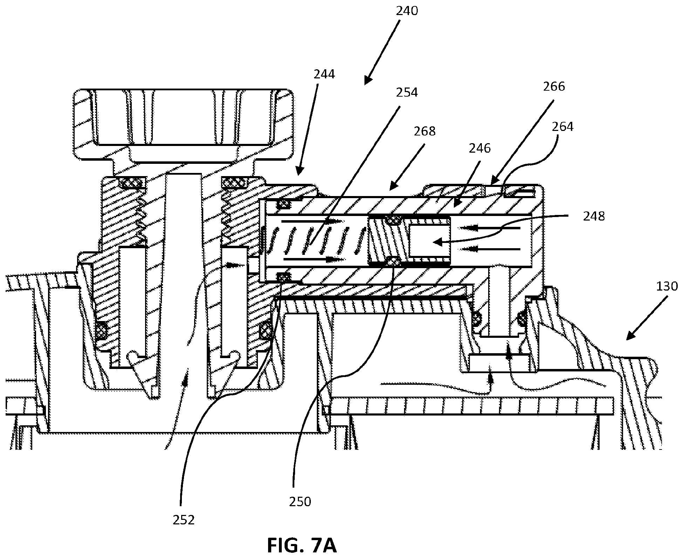

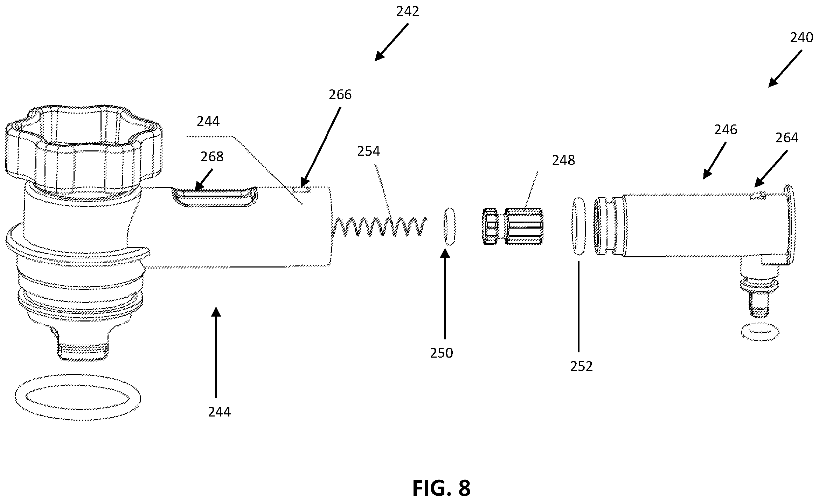

Referring to FIGS. 7, 7A, and 8, an exemplary prompt assembly 240 comprises a housing 242 having a first housing portion 244 and a second housing portion 246, a valve core 248, a seal 250 to be carried by valve core 248, a seal 252 to be carried by second housing portion 246, and an elastic body 254. Valve core 248 is movably disposed in the housing 242 to form the movable part. A right side of the valve core 248 (in FIG. 7A) is in communication with the water inlet and a left side of valve core 248 (in FIG. 7A) is in communication with the water outlet and abuts one end of the elastic body 254. The other end of the elastic body 254 is fixedly connected to an inner wall of the housing 244.

Housing portion 246 is received in an open end of housing portion 244 and seal 252 seals between second housing portion 246 and first housing portion 244. A tab 264 on second housing portion 246 is received in an opening 266 of first housing portion 244 to secure second housing portion 246 to first housing portion 244. Housing portion 244 further includes a window 268 through which second housing portion 246 is visible. In embodiments, second housing portion 246 is optically translucent so an operator may visually see a position of valve core 248 from an exterior of filter device 100.

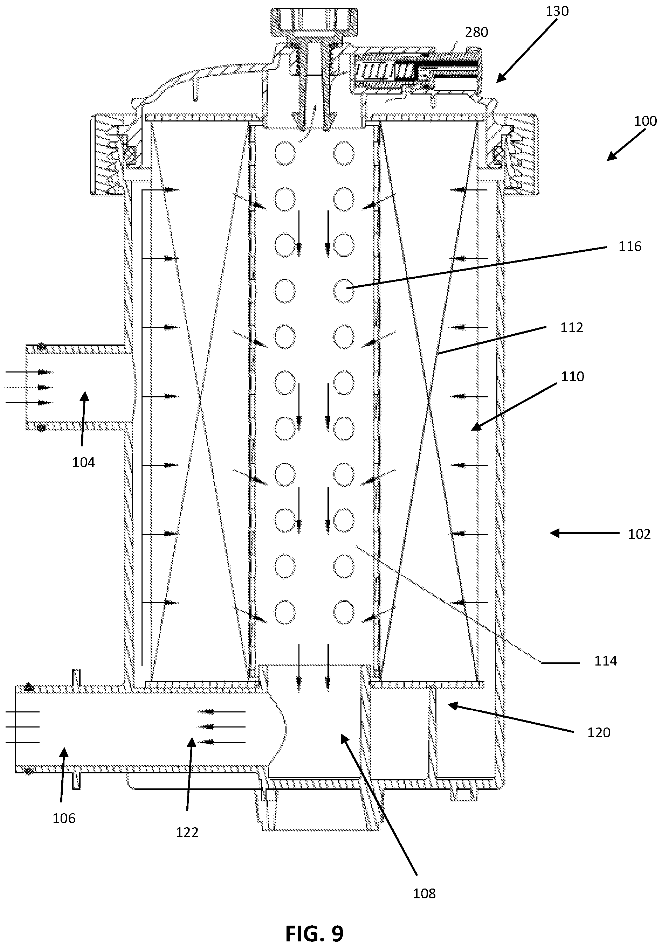

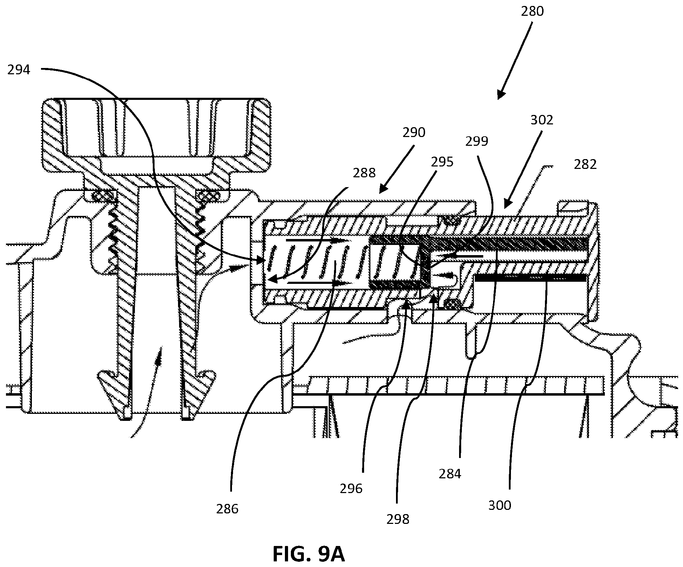

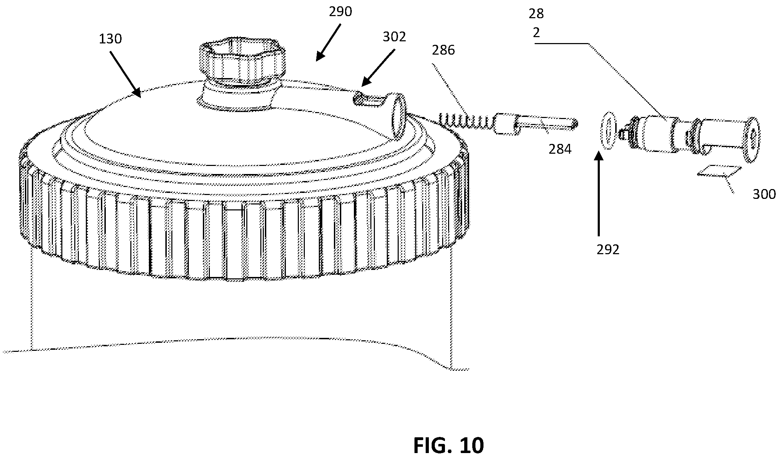

Referring to FIGS. 9, 9A, and 10, an exemplary prompt assembly 280 comprises a housing 282, a valve core 284, and an elastic body 286. The valve core 284 is disposed at a movable end of the elastic body 286 and is the movable part. One side 295 of the elastic body 286 facing away from the movable end abuts an internal wall 288 of a receiver 290 and is in fluid communication with the water outlet of filter element 110 through opening 294 in wall 288. Thus, the side of valve core 284 contacting elastic body 286 is also in fluid communication with the water outlet of filter element 110. The elastic body 286 and the valve core 284 are disposed in the housing 282 which itself is received in an open end of receiver 290. A seal 292 is carried by housing 282 and seals the connection between housing 282 and receiver 290. Housing 282 may be coupled to receiver 290 through fasteners, retainers, clips, adhesive, and other suitable couplers.

The other side 299 of the valve core 284 is in communication with the water inlet of filter element 110 through a water inlet hole 296 in receiver 290 and a water inlet hole 298 on the housing 282. According to a pressure difference in the water impinging on one side 295 of valve core 284 and other side 299 of valve core 284, the valve core 284 may be located in different positions.

The housing 282 is disposed with an indication sticker 300. Valve core 284 covers the indication sticker 300 with different areas when the valve core 284 is located in different positions. In embodiments, housing 282 is made of an optically translucent material so that indication sticker 300 is visible through a window 302 in receiver 290

By setting the indication sticker 300, the user can judge a use condition of the filter element 110 more intuitively. For example, different areas of the indication sticker 300 may be set to different colors. If a green color area is exposed, it is judged that the filter element 110 is still in a healthy state. If a yellow color area is exposed, it means that the filter element 110 is a little dirty. If a red color area is exposed, it means that the filter element 110 needs to be replaced. An advantage thereof, is a simple and clear approach to assessing the condition of the filter element

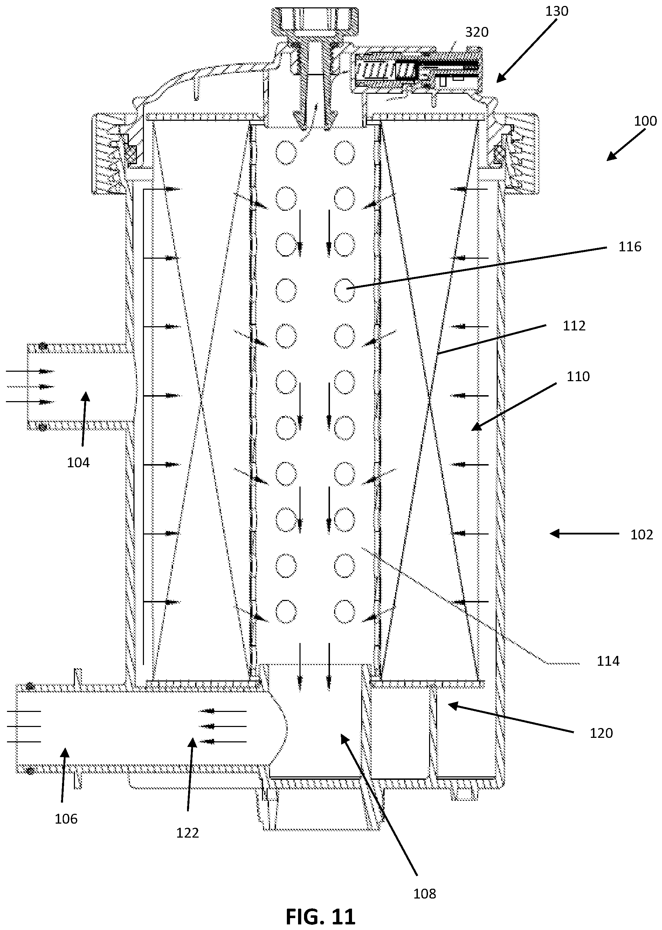

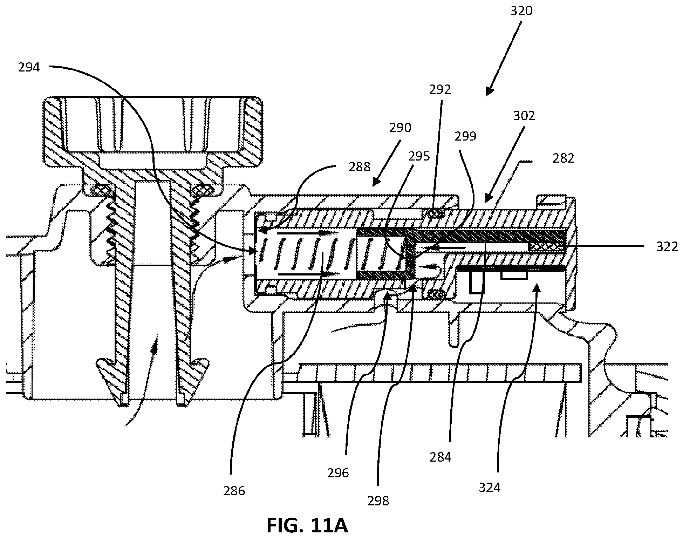

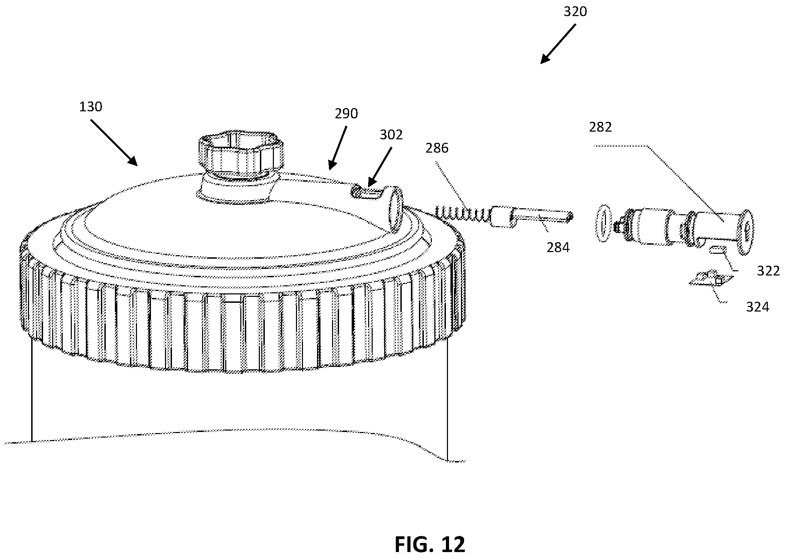

Referring to FIGS. 11, 11A, and 12, an exemplary prompt assembly 320 is shown. Prompt assembly 320 is the same as prompt assembly 280 except that indication sticker 300 is removed and replaced with a magnet 322 carried by valve core 284 which interfaces with a sensor carried by a circuit board 324 supported by housing 282. The sensor of circuit board 324 may judge a position of the valve core 284 to send a prompt signal through based on the relative position between the magnet 322 and the circuit board 324. Exemplary sensors include Hall effect sensors.

The prompt signal is a light signal, a sound signal or an APP prompt signal of a smart terminal. In this way, the user can know whether the filter element 110 needs to be replaced without observing the valve core 284.

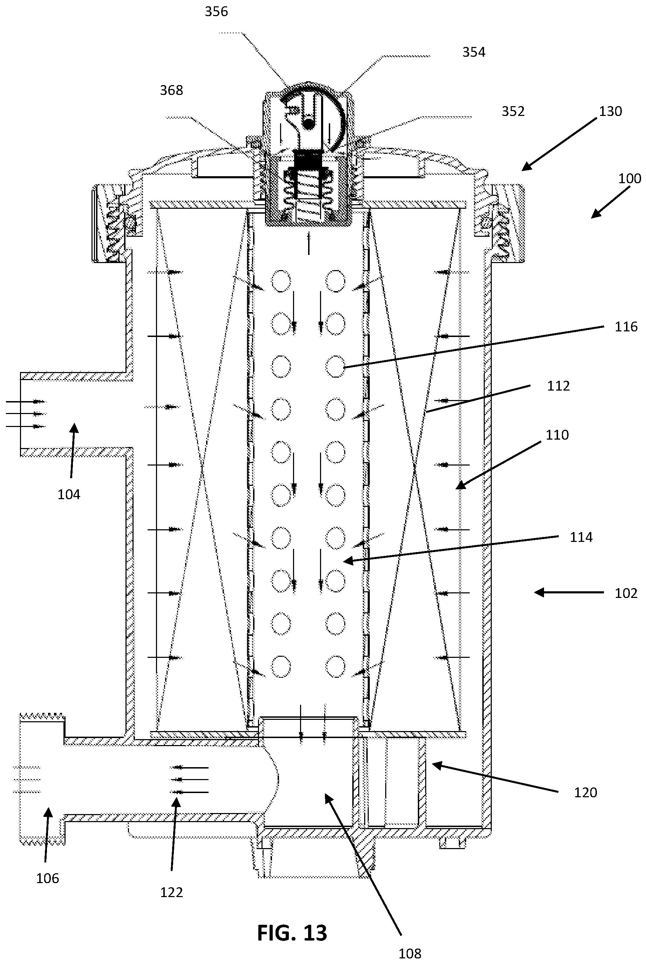

Referring to FIGS. 13-15A, an exemplary prompt assembly 350 comprises a pulling rod 352, a convex shell 354, and a housing 356. The convex shell 354 is swingingly connected to the pulling rod 352 at an eccentric position. The housing 352 has an observation window for observing a position of the convex shell 354. The observation window may be an opening or an optically translucent portion of 356.

When the filter element 110 is in a contaminated state, two ends of the pulling rod 352 move along an axial direction 360 of the pulling rod 352 due to a rise of pressure at the water inlet or a drop of pressure at the water outlet to pull the convex shell 354 to swing. In this way, the user only needs to observe the position of the convex shell 354 to know whether the filter element needs to be replaced due to contamination or not. A bottom side of pulling rod 352 is in fluid communication with either of the water inlet or the water outlet of filter element 110 through opening 358 and the top side of pulling rod 352 is in fluid communication with the other of the water inlet or the water outlet of filter element 110 through openings 359. Pulling rod 352 is biased by a biasing member 368 to a nominal position.

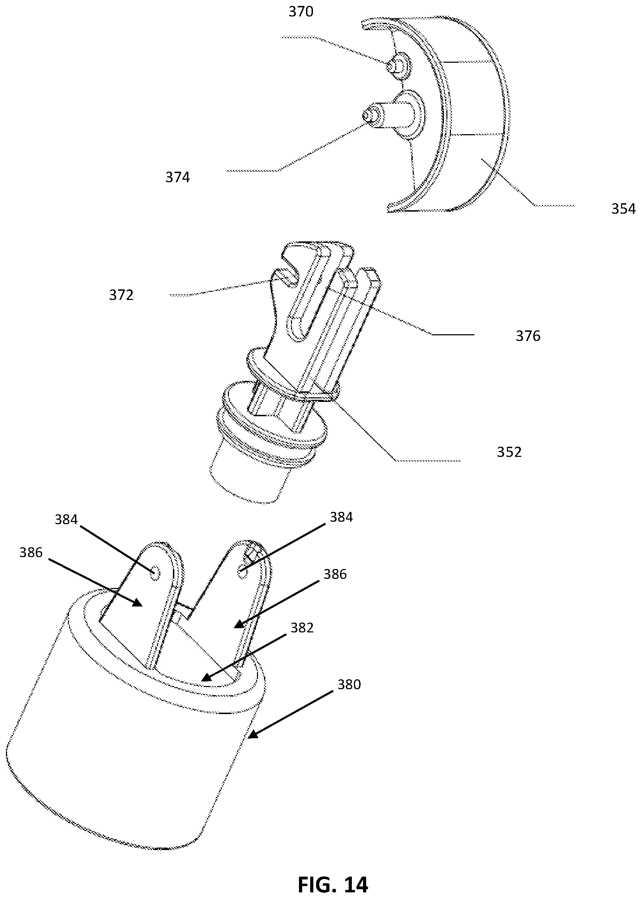

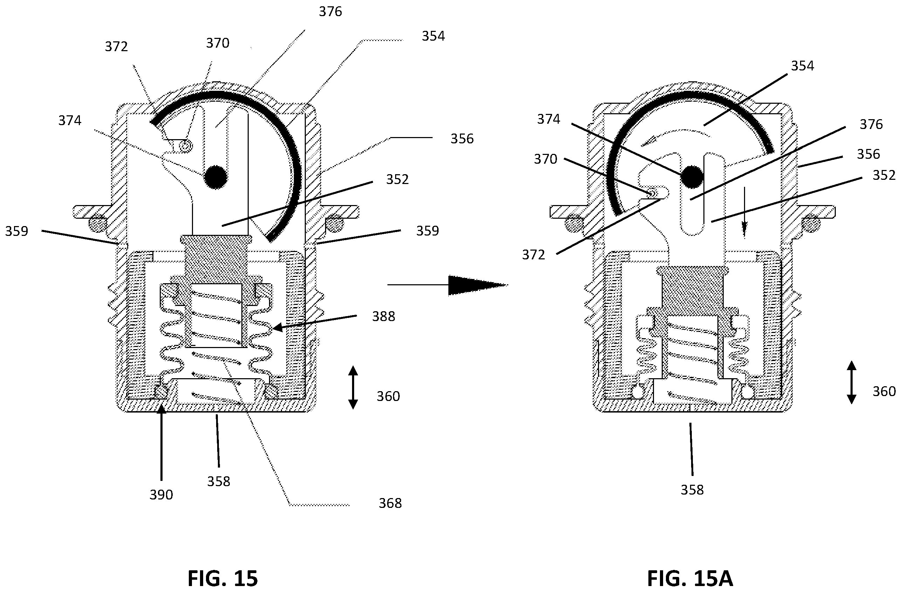

Referring to FIG. 14, a base 380 receives pulling rod 352 through opening 372. The second protruding column 374 of convex shell 354 includes a reduced diameter portion and a pin on the backside of convex shell 354 (not shown) which are received in openings 384 of upstanding protrusions 386 of base 380 to rotatably fix convex shell 354 to base 380. Referring to FIG. 15, an elastic bladder 388 is coupled to pulling rod 352 and is captured between base 380 and a cap 390 secured to housing 356. Elastic bladder 388 separates a lower side of pulling rod 352 which is in fluid communication with opening 358 in cap 390 from an upper side of pulling rod 352 which is in fluid communication with apertures 359 in housing 356.

In order to realize the connection between the convex shell 354 and the pulling rod 352, the convex shell 354 comprises a first protruding column 370 located at the eccentric position and the pulling rod 352 comprises a buckle slot 372 configured to matched with the first protruding column 370. The buckle slot 372 extends along a direction perpendicular to the axial direction of the pulling rod 352. The convex shell 354 further comprises a second protruding column 374 located at an axis of the convex shell 354 and the pulling rod 352 comprises a position-providing groove 376 along the axial direction of the pulling rod 352. When the convex shell 354 swings, the second protruding column 374 moves in the position-providing groove 376, and the first protruding column 370 moves in the buckle slot 372.

In addition, in order to realize that after the filter element 110 is replaced, the pulling rod 352 may drive the convex shell 354 to automatically be reset to an initial position due to pulling rod 352 being connected with a reset elastic member 368. When the two ends of the pulling rod 352 move along the axial direction 360 of the pulling rod 352 due to the rise of the pressure at the water inlet of filter element 110 or the drop of the pressure at the water outlet of filter element 110, the reset elastic member 368 is squeezed to generate elastic reset force. After the filter element is replaced in this way, a pressure difference between the two ends of the pulling rod 352 disappears, and the pulling rod 352 is automatically reset to an initial position due to the reset elastic member 368, which also drives the convex shell 354 to automatically reset to the initial position.

In this embodiment, the reset elastic member 368 may be an elastic member, or a retractable elastic bladder or a combination thereof.

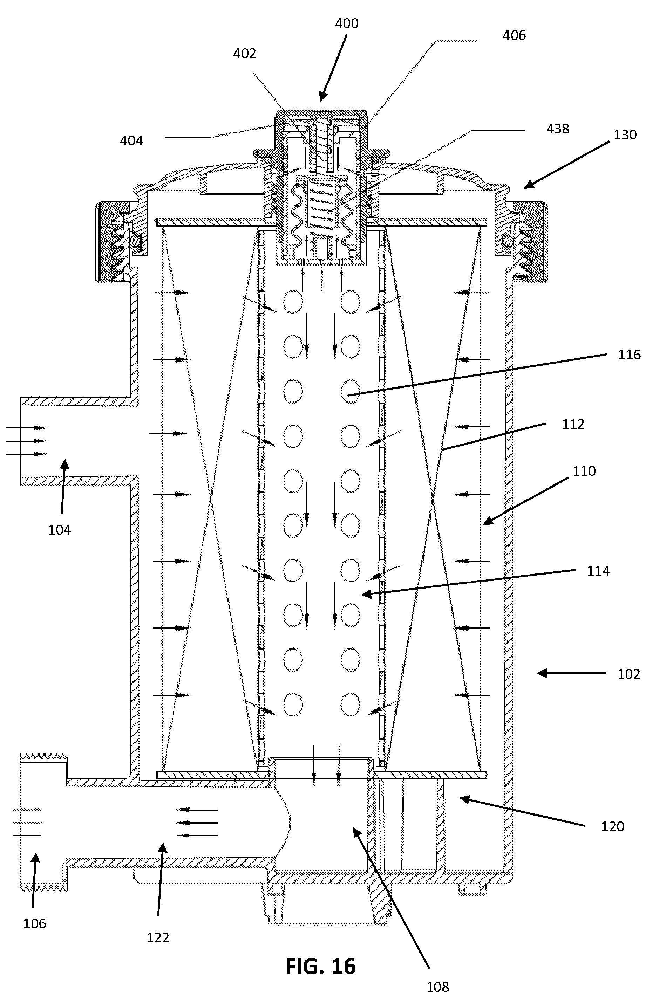

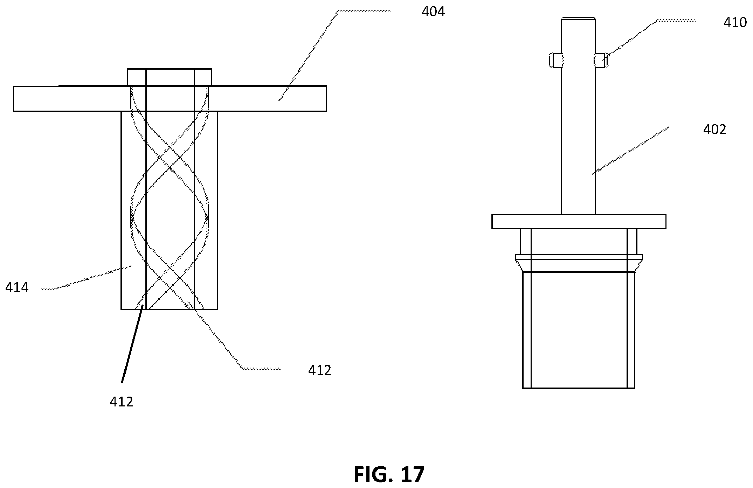

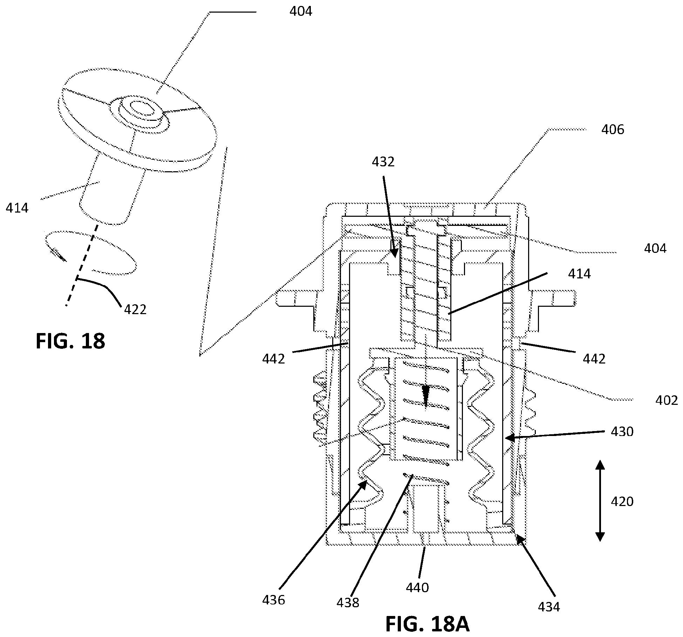

Referring to FIGS. 16-18A, an exemplary prompt assembly 400 in this embodiment comprises a pulling rod 402, a dial 404, and a housing 406. The housing 406 has an observation window for observing a relative position between the dial 404 and the housing 406.

The pulling rod 402 and the dial 404 are connected by a direction-changing member, illustratively a slider pin 410 carried by pulling rod 402 and corresponding grooves 412 on a support 414 coupled to housing 406). The direction-changing member is used to enable a translation of the pulling rod 402 along an axial direction 420 of the pulling rod 402 to be changed to a rotation of the dial 404 around an axis 422 of the dial 404.

Each of pulling rod 402 and dial 404 are received in a base 430 of housing 406. Base 430 includes a support 432 for dial 404 which maintains dial 404 up towards the upper surface of housing 406. An elastic bladder 436 is coupled to pulling rod 402 and captured between pulling rod 402 and a cap 434 of housing 406. A bottom side of pulling rod 402 is in fluid communication with either of the water inlet or the water outlet of filter element 110 through opening 440 and the top side of pulling rod 402 is in fluid communication with the other of the water inlet or the water outlet of filter element 110 through openings 442. Pulling rod 402 is biased by a biasing member 438 to a nominal position.

When the filter element 110 is in a contaminated state, slider pin 410 of the pulling rod 402 move along the axial direction 420 due to a rise of pressure at the water inlet or a drop of pressure at the water outlet to drive the dial 404 to rotate. The user can judge whether the filter element 110 needs to be replaced due to dirt by observing a relative position between the dial 404 and the observation window.

In order to achieve effect of direction changing, the dial 404 has a cylinder 414 that is operatively coupled to pulling rod 402. The direction-changing member comprises a spiral guide rail 412 disposed on the cylinder and a slider 410 disposed on the pulling rod 402. The slider 410 is operatively coupled to the spiral guide rail 412.

In order to automatically reset the dial 404 after the user replaces the filter element 110, the pulling rod 402 is connected with a reset elastic member 438. When slider pin 410 of the pulling rod 402 move along the axial direction 420 due to the rise of the pressure at the water inlet or the drop of the pressure at the water outlet, the reset elastic member 438 is squeezed to generate elastic reset force. After the filter element 110 is replaced in this way, a pressure difference between the two ends of the pulling rod 402 disappears, and the pulling rod 402 is automatically reset due to the reset elastic member 438, which also drives the dial 404 to be automatically reset.

In this embodiment, the reset elastic member 438 may be an elastic member, or a retractable elastic bladder or a combination thereof.

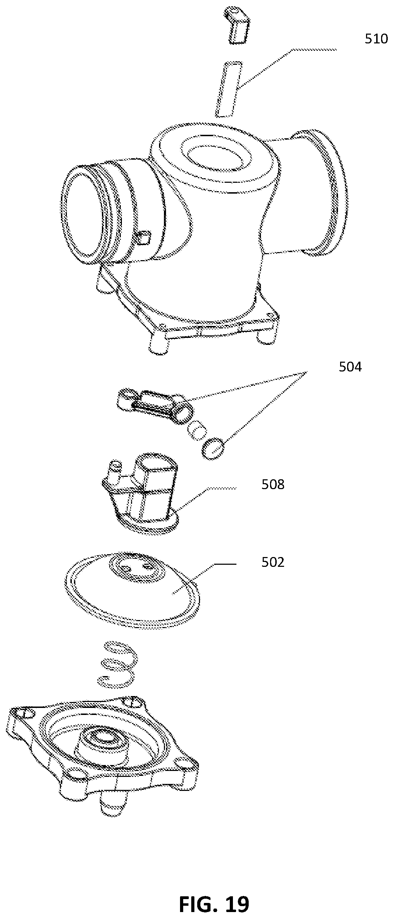

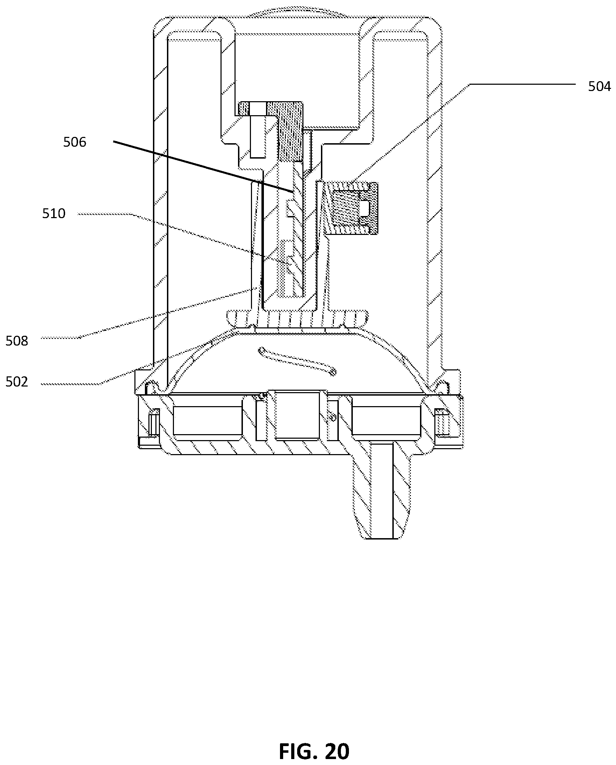

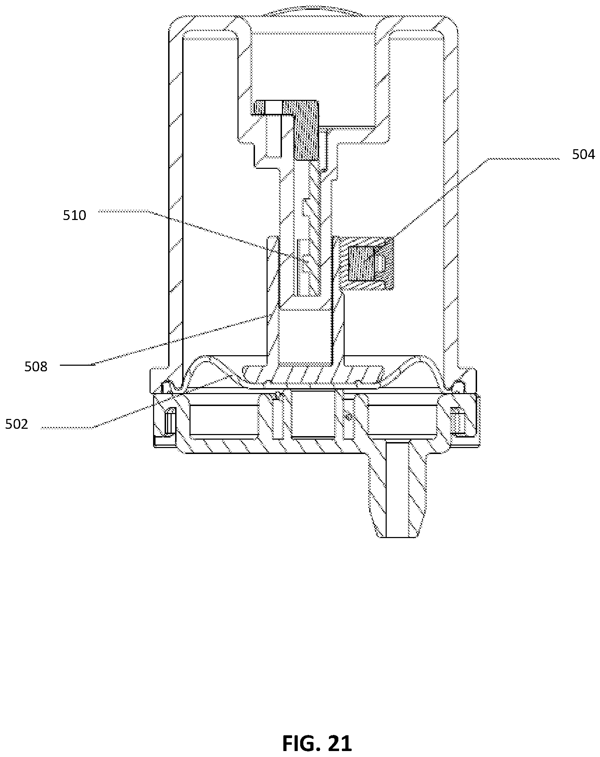

Referring to FIGS. 19-21, an exemplary prompt assembly 500 comprises an eardrum or diaphragm 502, a flow switch 504, a circuit board 506, and a valve stem 508. One end of the valve stem 508 is operatively coupled to a convex surface of the diaphragm 502. The flow switch 504 is fixedly connected to the valve stem 508. The circuit board comprises a Hall element 510.

When the filter element 110 is in a contaminated state, the convex surface of the diaphragm 502 is flattened due to a rise of pressure at the water inlet (which is in fluid communication with a top side of diaphragm 502) or a drop of pressure at the water outlet (which is in fluid communication with a bottom side of diaphragm 502) to drive the valve stem 508 and the flow switch 504 to move relative to the circuit board 506, so as to make the flow switch 504 cooperate with the Hall element 510.

In this technical solution, when the flow switch 504 and the Hall element 510 are aligned, the Hall element 510 will receive a characteristic of an electromagnetic signal, so as to identify different positions of the flow switch 504. However, after the Hall element 510 receives the electromagnetic signal, it can be considered that the filter element 110 has to be replaced because it is in the contaminated state, and a prompt signal to replace the filter element 110 is issued. The prompt signal may be a visual signal, an audio signal, a tactile signal, a wireless signal, or combinations thereof. By arranging a plurality of Hall elements 510, various prompt signals that the filter element is clean, dirty and must be replaced can be issued according to the different positions of the flow switch 504.

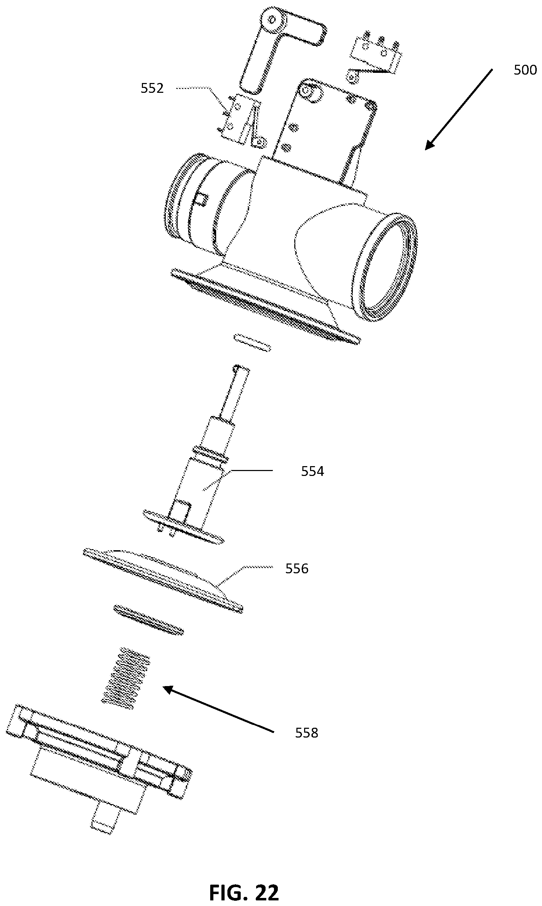

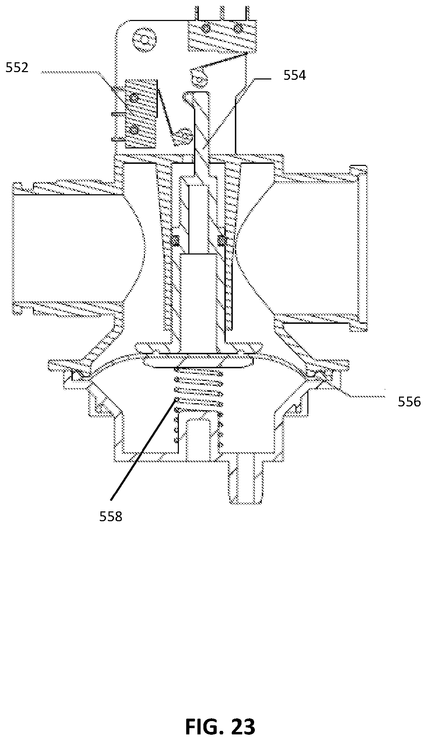

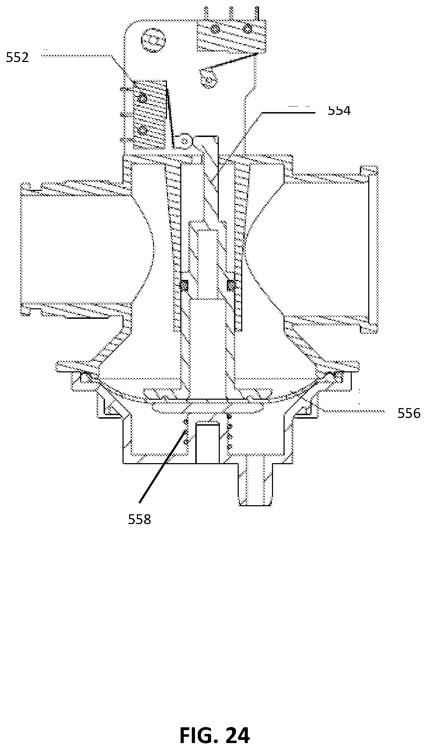

Referring to FIGS. 22-24, an exemplary prompt assembly 550 comprises a micro switch 552, a valve stem 554, a diaphragm 556, and a reset elastic member 558. One end of the valve stem 554 is operatively coupled to the reset elastic member 558 and is positioned on an upper side of diaphragm 556 while reset elastic member 558 is positioned on a lower side of diaphragm 556. The other end of the valve stem 554 is configured to cooperate with the micro switch 552 as shown in FIGS. 23 and 24. When the filter element 110 is in a contaminated state, the reset elastic member 508 is squeezed to drive the valve stem 554 to move to a second position shown in FIG. 24 due to a rise of pressure at the water inlet (top side of diaphragm 556) or a drop of pressure at the water outlet (bottom side of diaphragm 556), so as to make the other end of the valve stem 554 trigger the micro switch 552.

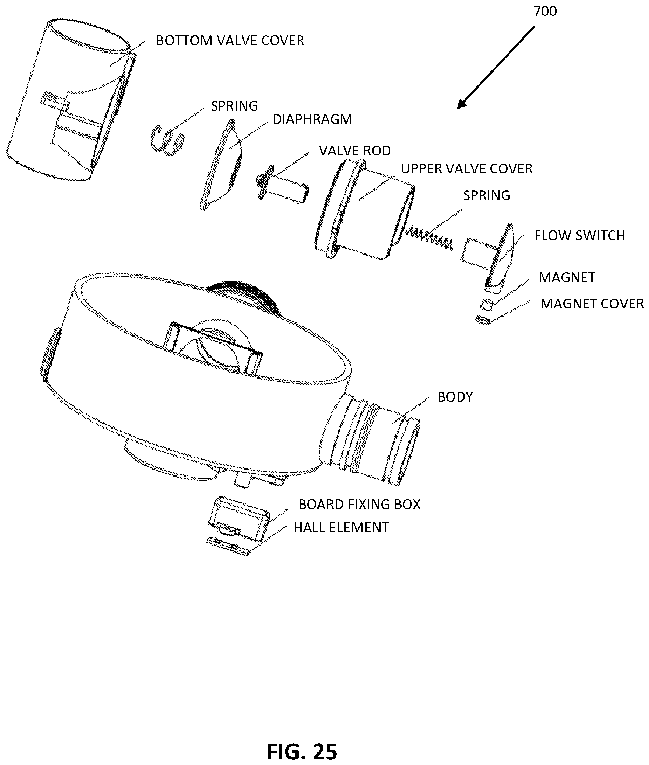

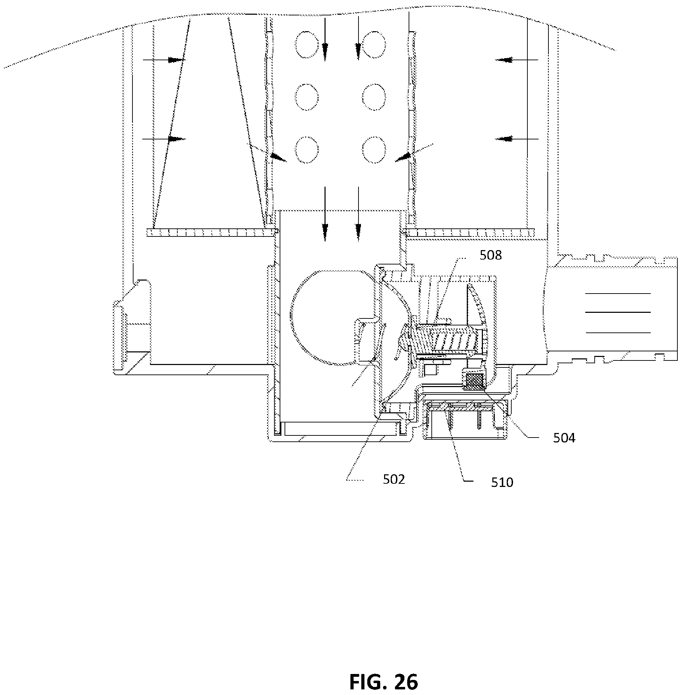

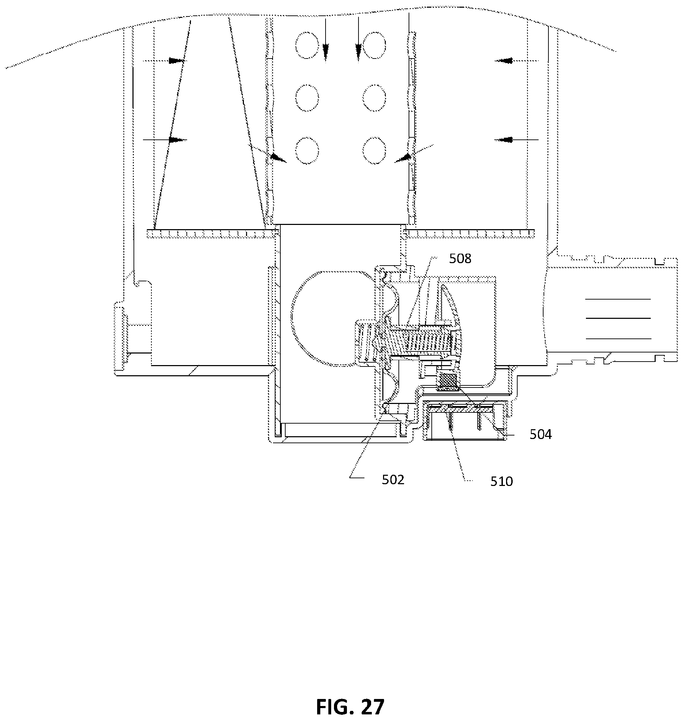

Referring to FIGS. 25 to 27, an exemplary prompt structure 700 is shown which functions similar to prompt assembly 500. The difference between prompt structure 700 and prompt assembly 500 is that the prompt assembly 500 is arranged outside the filter device, one end of prompt assembly 500 is connected to a water inlet port of the filter device 110, and the other end of prompt assembly 500 is connected to water outlet of the filter device 110 such as through a flexible hose. In this embodiment, prompt structure 700 is disposed in the filter device 100 and is located below the filter element 110.

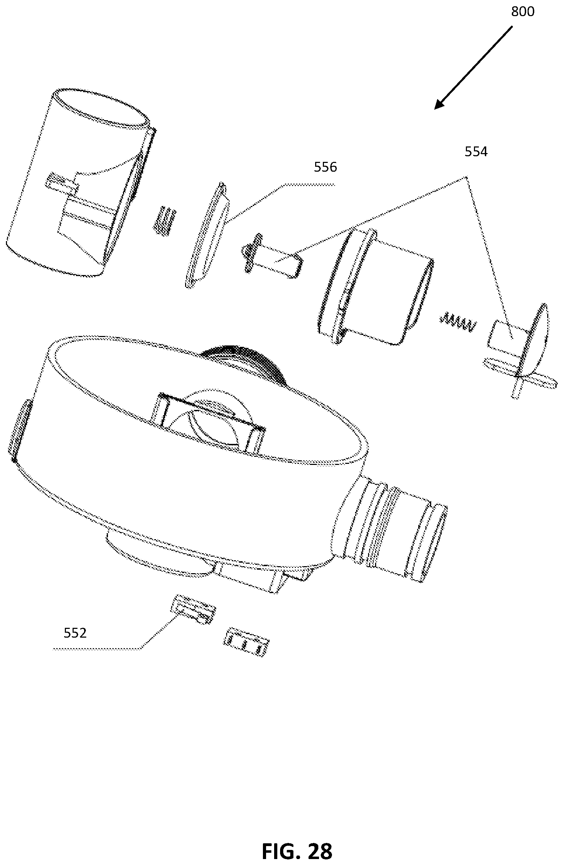

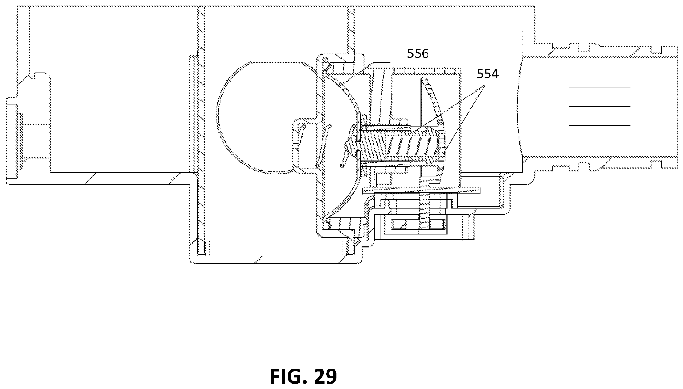

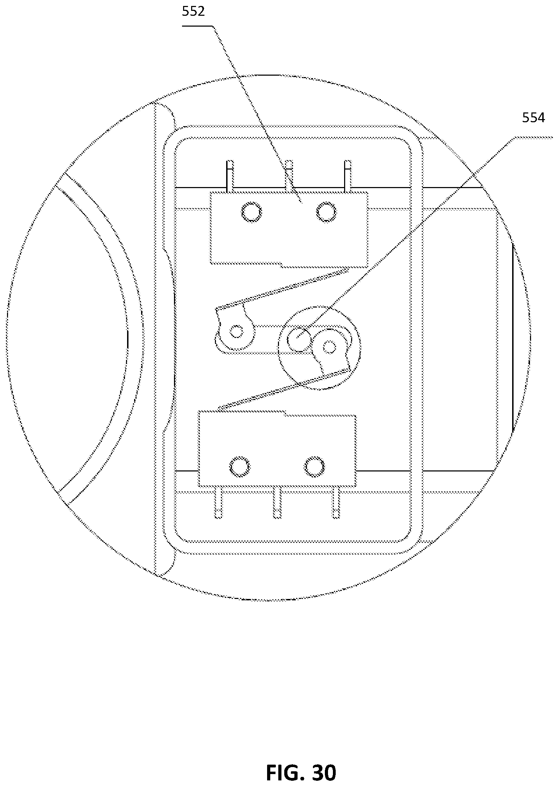

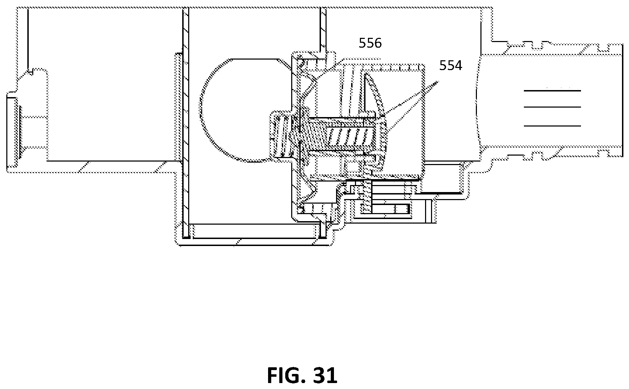

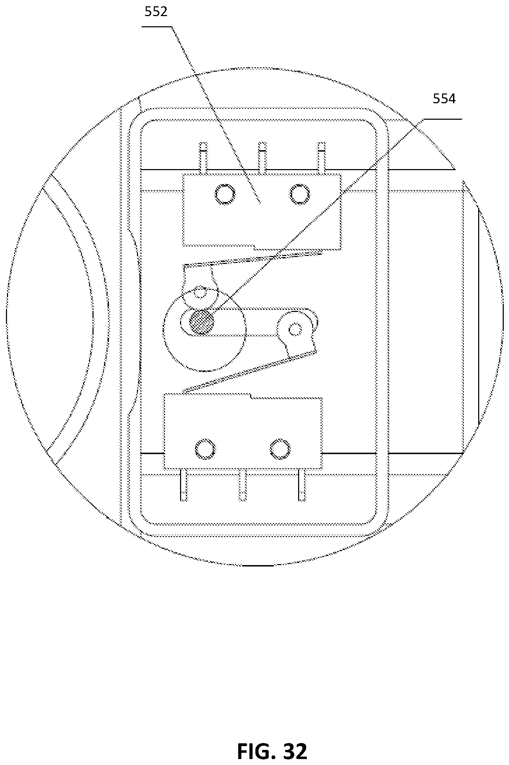

Referring to FIGS. 28 to 32, an exemplary prompt structure 800 is shown which functions similar to prompt assembly 550. The difference between prompt structure 800 and prompt assembly 550 is that prompt assembly 550 is arranged outside the filter device 100, one end of prompt assembly 550 is connected to the water inlet of the filter device 100, and the other end of prompt assembly 550 is connected to the water outlet of filter device 100, such as through a flexible hose. Prompt assembly 800 is disposed in the filter device 100 and is located below the filter element 110.

The prompt assemblies described herein may be incorporated as part of a filter device. The filter device may have a replaceable filter element with a filter medium positioned therein.

### Examples

Example 1. A contamination prompt structure for a filter medium may comprise a filter element and a prompt assembly. The prompt assembly may have a movable part. One end of the movable part may be in communication with a water inlet of the filter element, or a water outlet of the filter element. An other end of the movable part may be in communication with the other one of the water inlet of the filter element and the water outlet of the filter element, or outside air. The filter element may be in a contaminated state and a rise of pressure at the water inlet or a drop of pressure at the water outlet due to the contaminated state drives the movable part to move to send a prompt for a user to replace the filter element.

Example 2. The contamination prompt structure for the filter medium according to Example 1, wherein the prompt assembly may comprise a housing, an elastic body, a valve core, and an elastic bladder. The valve core may be disposed at a movable end of the elastic bladder to form the movable part. One side of the elastic bladder facing away from the movable end of the elastic bladder may be in communication with the water inlet of the filter element. The elastic bladder and the valve may be disposed in the housing. One end of the elastic body may be fixedly connected to an inner wall of the housing. The other end of the elastic body may abut the movable end of the elastic bladder. The housing may further comprise an exhaust hole in communication with the outside air.

Example 3. The contamination prompt structure for the filter medium according to Example 1, wherein the prompt assembly may comprise a housing, a valve core, and an elastic body. The valve core may be movably disposed in the housing to form the movable part. One side of the valve core may be in communication with the water inlet of the filter element. The other side of the valve core may be in contact with one end of the elastic body. The other end of the elastic body may be fixedly connected to an inner wall of the housing.

Example 4. The contamination prompt structure for the filter medium according to Example 1, wherein the prompt assembly may comprise a housing, a valve core, and an elastic bladder. The valve core may be disposed at a movable end of the elastic bladder to form the movable part. One side of the elastic bladder facing away from the movable end of the elastic bladder may be in communication with the water inlet of the filter element. The elastic bladder and the valve core may be disposed in the housing. One end of the elastic body may be fixedly connected to an inner wall of the housing. The other end of the elastic body may abut the movable end of the elastic bladder. One side of the valve core facing away from the elastic bladder may be in communication with the water outlet of the filter element through a water inlet hole on the housing.

Example 5. The contamination prompt structure for the filter medium according to Example 1, wherein the prompt assembly may comprise a housing, a valve core, and an elastic body. The valve core may be movably disposed in the housing to form the movable part. One side of the valve core may be in communication with the water inlet and may abut one end of the elastic body. The other end of the elastic body may be fixedly connected to an inner wall of the housing. One side of the valve core may be in communication with the water outlet through a water inlet hole on the housing.

Example 6. The contamination prompt structure for the filter medium according to Example 2, 3, 4, or 5, wherein the housing may be disposed with an observation window for observing a position of the valve core.

Example 7. The contamination prompt structure for the filter medium according to Example 1, wherein the prompt assembly may comprise a housing, a valve core and an elastic body. The valve core may be disposed at a movable end of the elastic body to form the movable part. One side of the elastic body facing away from the movable end may be in communication with the water inlet. The elastic body and the valve core may be disposed in the housing. One side of the valve core facing away from the elastic body may be in communication with the water outlet through a water inlet hole on the housing. The housing may be disposed with an indication sticker. The valve core may cover the indication sticker with different areas when the valve core is located in different positions.

Example 8. The contamination prompt structure for the filter medium according to Example 1, wherein the prompt assembly may comprise a housing, a valve core, and an elastic body. The valve core may be disposed at a movable end of the elastic body to form the movable part. One side of the elastic body facing away from the movable end may be in communication with the water inlet. The elastic body and the valve core may be disposed in the housing. One side of the valve core facing away from the elastic body may be in communication with the water outlet through a water inlet hole on the housing. The valve core may be disposed with a magnet. The housing may be disposed with a circuit board. The circuit board may be configured to judge a position of the valve core to send a prompt signal based on a relative position between the magnet and the circuit board.

Example 9. The contamination prompt structure for the filter medium according to Example 8, wherein the prompt signal may be a light signal, a sound signal or an APP prompt signal of a smart terminal.

Example 10. The contamination prompt structure for the filter medium according to Example 1, wherein the prompt assembly may comprise a pulling rod, a convex shell, and a housing. The convex shell may be swingingly connected to the pulling rod at an eccentric position. The housing has an observation window for observing a position of the convex shell. When the filter element is in the contaminated state, two ends of the pulling rod may move along an axial direction of the pulling rod due to a rise of pressure at the water inlet or a drop of pressure at the water outlet to pull the convex shell to swing.

Example 11. The contamination prompt structure for the filter medium according to Example 10, wherein the convex shell may comprise a first protruding column located at the eccentric position. The pulling rod may comprise a buckle slot configured to mate with the first protruding column. The buckle slot extends along a direction perpendicular to the axial direction of the pulling rod. The convex shell further comprises a second protruding column located at an axis of the convex shell. The pulling rod may comprises a position-providing groove along the axial direction of the pulling rod. When the convex shell swings the second protruding column may move in the position-providing groove and the first protruding column may move in the buckle slot.

Example 12. The contamination prompt structure for the filter medium according to Example 10, wherein the pulling rod may be connected with a reset elastic member. When the two ends of the pulling rod move along the axial direction of the pulling rod due to the rise of the pressure at the water inlet or the drop of the pressure at the water outlet, the reset elastic member may be squeezed to generate elastic reset force.

Example 13. The contamination prompt structure for the filter medium according to Example 1, wherein the prompt assembly may comprise a pulling rod, a dial, and a housing. The housing may have an observation window for observing a relative position between the dial and the housing. The pulling rod and the dial may be connected by a direction-changing member. The direction-changing member enables a translation of the pulling rod along an axial direction of the pulling rod to be changed to a rotation of the dial around an axis of the dial. When the filter element is in the contaminated state, two ends of the pulling rod may move along the axial direction of the pulling rod due to a rise of pressure at the water inlet or a drop of pressure at the water outlet to drive the dial to rotate

Example 14. The contamination prompt structure for the filter medium according to Example 13, wherein the dial may have a cylinder that may be operatively coupled to pulling rod. The direction-changing member may comprises a spiral guide rail disposed on the cylinder and a slider disposed on the pulling rod The slider may be operatively coupled to the spiral guide rail.

Example 15. The contamination prompt structure for the filter medium according to Example 13, wherein the pulling rod may be connected with a reset elastic member. When the two ends of the pulling rod move along the axial direction of the pulling rod due to the rise of the pressure at the water inlet or the drop of the pressure at the water outlet, the reset elastic member may be squeezed to generate elastic reset force.

Example 16. The contamination prompt structure for the filter medium according to Example 1, wherein the prompt assembly may comprise a diaphragm, a flow switch, a circuit board, and a valve stem. One end of the valve stem may be operatively coupled to a convex surface of the diaphragm. The flow switch may be fixedly connected to the valve stem. The circuit board may comprise a Hall element. When the filter element is in the contaminated state, the convex surface of the diaphragm may be flattened due to a rise of pressure at the water inlet or a drop of pressure at the water outlet to drive the valve stem and the flow switch to move relative to the circuit board, so as to make the flow switch cooperate with the Hall element.

Example 17. The contamination prompt structure for the filter medium according to Example 1, wherein the prompt assembly may comprise a micro switch, a valve stem, and a reset elastic member. One end of the valve stem may be operatively coupled to the reset elastic member. The other end of the valve stem may be configured to cooperate with the micro switch. When the filter element is in the contaminated state, the reset elastic member may be squeezed to drive the valve stem to move to a second position due to a rise of pressure at the water inlet or a drop of pressure at the water outlet, so as to make the other end of the valve stem trigger the micro switch.

Example 18. A filter device may be disposed with a contamination prompt structure for a filter medium according to any one of Examples 1-17.

Example 19. The filter device according to Example 18, wherein the prompt assembly may be located outside of the filter device. One end of the prompt assembly may be in communication with a water inlet port of the filter device. The other end of the prompt assembly may be connected to a water outlet of the filter device, optionally through a flexible hose.

Example 20. The filter device according to Example 18, wherein the prompt assembly may be disposed in the filter device and may be located below the filter element.

Example 21. A filter device having a replaceable filter element may comprise a housing having an interior adapted to receive the replaceable filter element, a water inlet in fluid communication with the interior, and a water outlet in fluid communication with the interior. The replaceable filter element may be positionable in the interior so that water received through the water inlet of the housing passes through the replaceable filter element to reach the water outlet of the housing. The filter device may further comprise a prompt assembly having a movable part. One end of the movable part may be in fluid communication with one of the water inlet and the water outlet. The other end of the movable part may be in fluid communication with the other one of the water inlet and the water outlet or outside air. The movable part provides an indication of a condition of the replaceable filter element.

Example 22. The filter device of Example 21, wherein the prompt assembly comprises a prompt housing, an elastic body, a valve core, and an elastic bladder. The valve core may be disposed at a movable end of the elastic bladder to form the movable part. One side of the elastic bladder facing away from the movable end of the elastic bladder may be in communication with the water inlet. The elastic bladder and the valve are disposed in the prompt housing. One end of the elastic body may be fixedly connected to an inner wall of the prompt housing. The other end of the elastic body may abut the movable end of the elastic bladder. The prompt housing further comprises an exhaust hole in communication with the outside air.

Example 23. The filter device of Example 21, wherein the prompt assembly may comprise a prompt housing, a valve core, and an elastic body. The valve core may be movably disposed in the prompt housing to form the movable part. One side of the valve core may be in communication with the water inlet. The other side of the valve core may be in contact with one end of the elastic body. The other end of the elastic body may be fixedly connected to an inner wall of the prompt housing.

Example 24. The filter device of Example 21, wherein the prompt assembly may comprise a prompt housing, a valve core, and an elastic bladder. The valve core may be disposed at a movable end of the elastic bladder to form the movable part. One side of the elastic bladder facing away from the movable end of the elastic bladder may be in communication with the water inlet. The elastic bladder and the valve core are disposed in the prompt housing. One end of the elastic body may be fixedly connected to an inner wall of the prompt housing. The other end of the elastic body may abut the movable end of the elastic bladder. One side of the valve core facing away from the elastic bladder may be in communication with the water outlet through a water inlet hole on the prompt housing.

Example 25. The filter device of Example 21, wherein the prompt assembly may comprise a prompt housing, a valve core, and an elastic body. The valve core may be movably disposed in the prompt housing to form the movable part. One side of the valve core may be in communication with the water inlet and abuts one end of the elastic body. The other end of the elastic body may be fixedly connected to an inner wall of the prompt housing. One side of the valve core may be in communication with the water outlet through a water inlet hole on the housing.

Example 26. The filter device of Example 22, 23, 24, or 25, wherein the prompt housing may be disposed with an observation window for observing a position of the valve core.

Example 27. The filter device of Example 21, wherein the prompt assembly may comprise a prompt housing, a valve core and an elastic body. The valve core may be disposed at a movable end of the elastic body to form the movable part. One side of the elastic body facing away from the movable end may be in communication with the water inlet. The elastic body and the valve core may be disposed in the prompt housing. One side of the valve core facing away from the elastic body may be in communication with the water outlet through a water inlet hole on the prompt housing. The prompt housing may be disposed with an indication sticker. The valve core may cover the indication sticker with different areas when the valve core is located in different positions.

Example 28. The filter device Example 21, wherein the prompt assembly may comprise a prompt housing, a valve core, and an elastic body. The valve core may be disposed at a movable end of the elastic body to form the movable part. One side of the elastic body facing away from the movable end may be in communication with the water inlet. The elastic body and the valve core are disposed in the prompt housing. One side of the valve core facing away from the elastic body may be in communication with the water outlet through a water inlet hole on the prompt housing. The valve core may be disposed with a magnet. The prompt housing may be disposed with a circuit board. The circuit board may be configured to judge a position of the valve core to send a prompt signal based on a relative position between the magnet and the circuit board.

Example 29. The filter device of Example 21, wherein the prompt assembly may comprise a pulling rod, a convex shell, and a prompt housing. The convex shell may be swingingly connected to the pulling rod at an eccentric position. The prompt housing has an observation window for observing a position of the convex shell. The pulling rod moves along an axial direction of the pulling rod causing the convex shell to rotate.

Example 30. The filter device of Example 29, wherein the convex shell may comprise a first protruding column located at the eccentric position. The pulling rod may comprise a buckle slot configured to mate with the first protruding column. The buckle slot may extend along a direction perpendicular to the axial direction of the pulling rod. The convex shell may further comprise a second protruding column located at an axis of the convex shell. The pulling rod may comprise a position-providing groove along the axial direction of the pulling rod. When the convex shell rotates the second protruding column moves in the position-providing groove and the first protruding column moves in the buckle slot.

Example 31. The filter device of Example 29, wherein the pulling rod may be connected with a reset elastic member. When the pulling rod moves along the axial direction of the pulling rod due to the rise of the pressure at the water inlet or the drop of the pressure at the water outlet, the reset elastic member may be squeezed to generate elastic reset force.

Example 32. The filter device of Example 21, wherein the prompt assembly may comprise a pulling rod, a dial, and a prompt housing. The prompt housing may have an observation window for observing a relative position between the dial and the prompt housing. The pulling rod and the dial are connected by a direction-changing member. The direction-changing member may enable a translation of the pulling rod along an axial direction of the pulling rod to be changed to a rotation of the dial around an axis of the dial. The pulling rod may move along the axial direction of the pulling rod due to drive the dial to rotate

Example 33. The filter device of Example 32, wherein the dial has a cylinder that may be operatively coupled to pulling rod. The direction-changing member may comprise a spiral guide rail disposed on the cylinder and a slider disposed on the pulling rod. The slider may be operatively coupled to the spiral guide rail.

Example 34. The filter device of Example 32, wherein the pulling rod may be connected with a reset elastic member. When the pulling rod moves along the axial direction of the pulling rod due to the rise of the pressure at the water inlet or the drop of the pressure at the water outlet, the reset elastic member may be squeezed to generate elastic reset force.

Example 35. The filter device of Example 21, wherein the prompt assembly may comprise a diaphragm, a flow switch, a circuit board, and a valve stem. One end of the valve stem may be operatively coupled to a convex surface of the diaphragm. The flow switch may be fixedly connected to the valve stem. The circuit board comprises a Hall element. The convex surface of the diaphragm may be flattened due to a rise of pressure at the water inlet or a drop of pressure at the water outlet to drive the valve stem and the flow switch to move relative to the circuit board, so as to make the flow switch cooperate with the Hall element.

Example 36. The filter device of Example 21, wherein the prompt assembly comprises a micro switch, a valve stem, and a reset elastic member. One end of the valve stem may be operatively coupled to the reset elastic member. The other end of the valve stem may be configured to cooperate with the micro switch. The reset elastic member may be squeezed to drive the valve stem to move to a second position due to a rise of pressure at the water inlet or a drop of pressure at the water outlet, so as to make the other end of the valve stem trigger the micro switch.

Example 37. The filter device of Example 21, wherein the prompt assembly may be located outside of the filter device.

Example 38. The filter device of Example 21, wherein the prompt assembly may be disposed in the filter device and may be located below the filter element.

Example 39. A contamination prompt structure for a filter medium, comprising: a filter element, and a prompt assembly, wherein: the prompt assembly has a movable part, one end of the movable part is in communication with a water inlet of the filter element, or a water outlet of the filter element, an other end of the movable part is in communication with the other one of the water inlet of the filter element and the water outlet of the filter element, or outside air, when the filter element is in a contaminated state, a rise of pressure at the water inlet or a drop of pressure at the water outlet drives the movable part to move to send a prompt for a user to replace the filter element.

Example 40. The contamination prompt structure for the filter medium according to example 39, wherein: the prompt assembly comprises a housing, an elastic body, a valve core, and an elastic bladder, the valve core is disposed at a movable end of the elastic bladder to form the movable part, one side of the elastic bladder facing away from the movable end of the elastic bladder is in communication with the water inlet of the filter element, the elastic bladder and the valve are disposed in the housing, one end of the elastic body is fixedly connected to an inner wall of the housing, the other end of the elastic body abuts the movable end of the elastic bladder, and the housing further comprises an exhaust hole in communication with the outside air.

Example 41. The contamination prompt structure for the filter medium according to example 39, wherein: the prompt assembly comprises a housing, a valve core, and an elastic body, the valve core is movably disposed in the housing to form the movable part, one side of the valve core is in communication with the water inlet of the filter element, the other side of the valve core is in contact with one end of the elastic body, and the other end of the elastic body is fixedly connected to an inner wall of the housing.

Example 42. The contamination prompt structure for the filter medium according to example 39, wherein: the prompt assembly comprises a housing, a valve core, and an elastic bladder, the valve core is disposed at a movable end of the elastic bladder to form the movable part, one side of the elastic bladder facing away from the movable end of the elastic bladder is in communication with the water inlet of the filter element, the elastic bladder and the valve core are disposed in the housing, one end of the elastic body is fixedly connected to an inner wall of the housing, the other end of the elastic body abuts the movable end of the elastic bladder, and one side of the valve core facing away from the elastic bladder is in communication with the water outlet of the filter element through a water inlet hole on the housing.

Example 43. The contamination prompt structure for the filter medium according to example 39, wherein: the prompt assembly comprises a housing, a valve core, and an elastic body, the valve core is movably disposed in the housing to form the movable part, one side of the valve core is in communication with the water inlet and abuts one end of the elastic body, the other end of the elastic body is fixedly connected to an inner wall of the housing, and one side of the valve core is in communication with the water outlet through a water inlet hole on the housing.

Example 44. The contamination prompt structure for the filter medium according to example 40, 41, 42, or 43, wherein: the housing is disposed with an observation window for observing a position of the valve core.

Example 45. The contamination prompt structure for the filter medium according to example 39, wherein: the prompt assembly comprises a housing, a valve core and an elastic body, the valve core is disposed at a movable end of the elastic body to form the movable part, one side of the elastic body facing away from the movable end is in communication with the water inlet, the elastic body and the valve core are disposed in the housing, one side of the valve core facing away from the elastic body is in communication with the water outlet through a water inlet hole on the housing, the housing is disposed with an indication sticker, and the valve core covers the indication sticker with different areas when the valve core is located in different positions.

Example 46. The contamination prompt structure for the filter medium according to example 39, wherein: the prompt assembly comprises a housing, a valve core, and an elastic body, the valve core is disposed at a movable end of the elastic body to form the movable part, one side of the elastic body facing away from the movable end is in communication with the water inlet, the elastic body and the valve core are disposed in the housing, one side of the valve core facing away from the elastic body is in communication with the water outlet through a water inlet hole on the housing, the valve core is disposed with a magnet, the housing is disposed with a circuit board, and the circuit board is configured to judge a position of the valve core to send a prompt signal based on a relative position between the magnet and the circuit board.

Example 47. The contamination prompt structure for the filter medium according to example 46, wherein: the prompt signal is a light signal, a sound signal or an APP prompt signal of a smart terminal.

Example 48. The contamination prompt structure for the filter medium according to example 39, wherein: the prompt assembly comprises a pulling rod, a convex shell, and a housing, the convex shell is swingingly connected to the pulling rod at an eccentric position, the housing has an observation window for observing a position of the convex shell, and when the filter element is in the contaminated state, two ends of the pulling rod move along an axial direction of the pulling rod due to a rise of pressure at the water inlet or a drop of pressure at the water outlet to pull the convex shell to swing.

Example 49. The contamination prompt structure for the filter medium according to example 48, wherein: the convex shell comprises a first protruding column located at the eccentric position, the pulling rod comprises a buckle slot configured to mate with the first protruding column, the buckle slot extends along a direction perpendicular to the axial direction of the pulling rod, the convex shell further comprises a second protruding column located at an axis of the convex shell, the pulling rod comprises a position-providing groove along the axial direction of the pulling rod, and when the convex shell swings: the second protruding column moves in the position-providing groove, and the first protruding column moves in the buckle slot.

Example 50. The contamination prompt structure for the filter medium according to example 48, wherein: the pulling rod is connected with a reset elastic member, and when the two ends of the pulling rod move along the axial direction of the pulling rod due to the rise of the pressure at the water inlet or the drop of the pressure at the water outlet, the reset elastic member is squeezed to generate elastic reset force.

Example 51. The contamination prompt structure for the filter medium according to example 39, wherein: the prompt assembly comprises a pulling rod, a dial, and a housing, the housing has an observation window for observing a relative position between the dial and the housing, the pulling rod and the dial are connected by a direction-changing member, the direction-changing member enables a translation of the pulling rod along an axial direction of the pulling rod to be changed to a rotation of the dial around an axis of the dial, and when the filter element is in the contaminated state, two ends of the pulling rod move along the axial direction of the pulling rod due to a rise of pressure at the water inlet or a drop of pressure at the water outlet to drive the dial to rotate.

Example 52. The contamination prompt structure for the filter medium according to example 51, wherein: the dial has a cylinder that is operatively coupled to pulling rod, the direction-changing member comprises a spiral guide rail disposed on the cylinder and a slider disposed on the pulling rod, and the slider is operatively coupled to the spiral guide rail.

Example 53. The contamination prompt structure for the filter medium according to example 51, wherein: the pulling rod is connected with a reset elastic member, and when the two ends of the pulling rod move along the axial direction of the pulling rod due to the rise of the pressure at the water inlet or the drop of the pressure at the water outlet, the reset elastic member is squeezed to generate elastic reset force.

Example 54. The contamination prompt structure for the filter medium according to example 39, wherein: the prompt assembly comprises a diaphragm, a flow switch, a circuit board, and a valve stem, one end of the valve stem is operatively coupled to a convex surface of the diaphragm, the flow switch is fixedly connected to the valve stem, the circuit board comprises a Hall element, and when the filter element is in the contaminated state, the convex surface of the diaphragm is flattened due to a rise of pressure at the water inlet or a drop of pressure at the water outlet to drive the valve stem and the flow switch to move relative to the circuit board, so as to make the flow switch cooperate with the Hall element.

Example 55. The contamination prompt structure for the filter medium according to example 39, wherein: the prompt assembly comprises a micro switch, a valve stem, and a reset elastic member, one end of the valve stem is operatively coupled to the reset elastic member, the other end of the valve stem is configured to cooperate with the micro switch, and when the filter element is in the contaminated state, the reset elastic member is squeezed to drive the valve stem to move to a second position due to a rise of pressure at the water inlet or a drop of pressure at the water outlet, so as to make the other end of the valve stem trigger the micro switch.

Example 56. A filter device, wherein: the filter device is disposed with a contamination prompt structure for a filter medium according to any one of examples 39 to 55.

Example 57. The filter device according to example 56, wherein: the prompt assembly is located outside of the filter device, one end of the prompt assembly is in communication with a water inlet port of the filter device, and the other end of the prompt assembly is connected to a water outlet of the filter device, optionally through a flexible hose.

Example 58. The filter device according to example 56, wherein: the prompt assembly is disposed in the filter device and is located below the filter element.

Example 59. A filter device having a replaceable filter element, comprising: a housing having an interior adapted to receive the replaceable filter element, a water inlet in fluid communication with the interior, and a water outlet in fluid communication with the interior, the replaceable filter element being positionable in the interior so that water received through the water inlet of the housing passes through the replaceable filter element to reach the water outlet of the housing; and a prompt assembly having a movable part, one end of the movable part is in fluid communication with one of the water inlet and the water outlet and the other end of the movable part is in fluid communication with the other one of the water inlet and the water outlet or outside air, the movable part provides an indication of a condition of the replaceable filter element.

Example 60. The filter device of example 59, wherein: the prompt assembly comprises a prompt housing, an elastic body, a valve core, and an elastic bladder, the valve core is disposed at a movable end of the elastic bladder to form the movable part, one side of the elastic bladder facing away from the movable end of the elastic bladder is in communication with the water inlet, the elastic bladder and the valve are disposed in the prompt housing, one end of the elastic body is fixedly connected to an inner wall of the prompt housing, the other end of the elastic body abuts the movable end of the elastic bladder, and the prompt housing further comprises an exhaust hole in communication with the outside air.

Example 61. The filter device of example 59, wherein: the prompt assembly comprises a prompt housing, a valve core, and an elastic body, the valve core is movably disposed in the prompt housing to form the movable part, one side of the valve core is in communication with the water inlet, the other side of the valve core is in contact with one end of the elastic body, and the other end of the elastic body is fixedly connected to an inner wall of the prompt housing.

Example 62. The filter device of example 59, wherein: the prompt assembly comprises a prompt housing, a valve core, and an elastic bladder, the valve core is disposed at a movable end of the elastic bladder to form the movable part, one side of the elastic bladder facing away from the movable end of the elastic bladder is in communication with the water inlet, the elastic bladder and the valve core are disposed in the prompt housing, one end of the elastic body is fixedly connected to an inner wall of the prompt housing, the other end of the elastic body abuts the movable end of the elastic bladder, and one side of the valve core facing away from the elastic bladder is in communication with the water outlet through a water inlet hole on the prompt housing.

Example 63. The filter device of example 59, wherein: the prompt assembly comprises a prompt housing, a valve core, and an elastic body, the valve core is movably disposed in the prompt housing to form the movable part, one side of the valve core is in communication with the water inlet and abuts one end of the elastic body, the other end of the elastic body is fixedly connected to an inner wall of the prompt housing, and one side of the valve core is in communication with the water outlet through a water inlet hole on the housing.

Example 64. The filter device of example 60, 61, 62, or 63, wherein: the prompt housing is disposed with an observation window for observing a position of the valve core.

Example 65. The filter device of example 59, wherein: the prompt assembly comprises a prompt housing, a valve core and an elastic body, the valve core is disposed at a movable end of the elastic body to form the movable part, one side of the elastic body facing away from the movable end is in communication with the water inlet, the elastic body and the valve core are disposed in the prompt housing, one side of the valve core facing away from the elastic body is in communication with the water outlet through a water inlet hole on the prompt housing, the prompt housing is disposed with an indication sticker, and the valve core covers the indication sticker with different areas when the valve core is located in different positions.

Example 66. The filter device example 59, wherein: the prompt assembly comprises a prompt housing, a valve core, and an elastic body, the valve core is disposed at a movable end of the elastic body to form the movable part, one side of the elastic body facing away from the movable end is in communication with the water inlet, the elastic body and the valve core are disposed in the prompt housing, one side of the valve core facing away from the elastic body is in communication with the water outlet through a water inlet hole on the prompt housing, the valve core is disposed with a magnet, the prompt housing is disposed with a circuit board, and the circuit board is configured to judge a position of the valve core to send a prompt signal based on a relative position between the magnet and the circuit board.

Example 67. The filter device of example 59, wherein: the prompt assembly comprises a pulling rod, a convex shell, and a prompt housing, the convex shell is swingingly connected to the pulling rod at an eccentric position, the prompt housing has an observation window for observing a position of the convex shell, and wherein the pulling rod moves along an axial direction of the pulling rod causing the convex shell to rotate.

Example 68. The filter device of example 67, wherein: the convex shell comprises a first protruding column located at the eccentric position, the pulling rod comprises a buckle slot configured to mate with the first protruding column, the buckle slot extends along a direction perpendicular to the axial direction of the pulling rod, the convex shell further comprises a second protruding column located at an axis of the convex shell, the pulling rod comprises a position-providing groove along the axial direction of the pulling rod, and when the convex shell rotates: the second protruding column moves in the position-providing groove, and the first protruding column moves in the buckle slot.

Example 69. The filter device of example 67, wherein: the pulling rod is connected with a reset elastic member, and when the pulling rod move along the axial direction of the pulling rod due to the rise of the pressure at the water inlet or the drop of the pressure at the water outlet, the reset elastic member is squeezed to generate elastic reset force.

Example 70. The filter device of example 59, wherein: the prompt assembly comprises a pulling rod, a dial, and a prompt housing, the prompt housing has an observation window for observing a relative position between the dial and the prompt housing, the pulling rod and the dial are connected by a direction-changing member, the direction-changing member enables a translation of the pulling rod along an axial direction of the pulling rod to be changed to a rotation of the dial around an axis of the dial, and wherein the pulling rod moves along the axial direction of the pulling rod due to drive the dial to rotate.

Example 71. The filter device of example 70, wherein: the dial has a cylinder that is operatively coupled to pulling rod, the direction-changing member comprises a spiral guide rail disposed on the cylinder and a slider disposed on the pulling rod, and the slider is operatively coupled to the spiral guide rail.

Example 72. The filter device of example 70, wherein: the pulling rod is connected with a reset elastic member, and when the pulling rod moves along the axial direction of the pulling rod due to the rise of the pressure at the water inlet or the drop of the pressure at the water outlet, the reset elastic member is squeezed to generate elastic reset force.

Example 73. The filter device of example 59, wherein: the prompt assembly comprises a diaphragm, a flow switch, a circuit board, and a valve stem, one end of the valve stem is operatively coupled to a convex surface of the diaphragm, the flow switch is fixedly connected to the valve stem, the circuit board comprises a Hall element, and the convex surface of the diaphragm is flattened due to a rise of pressure at the water inlet or a drop of pressure at the water outlet to drive the valve stem and the flow switch to move relative to the circuit board, so as to make the flow switch cooperate with the Hall element.

Example 74. The filter device of example 59, wherein: the prompt assembly comprises a micro switch, a valve stem, and a reset elastic member, one end of the valve stem is operatively coupled to the reset elastic member, the other end of the valve stem is configured to cooperate with the micro switch, and the reset elastic member is squeezed to drive the valve stem to move to a second position due to a rise of pressure at the water inlet or a drop of pressure at the water outlet, so as to make the other end of the valve stem trigger the micro switch.

Example 75. The filter device of example 59, wherein: the prompt assembly is located outside of the filter device.

Example 76. The filter device of example 59, wherein: the prompt assembly is disposed in the filter device and is located below the filter element.

It will be apparent to those skilled in the art that various modifications and variation can be made in the present disclosure without departing from the spirit or scope of the disclosure. Thus, it is intended that the present disclosure cover the modifications and variations of this disclosure provided they come within the scope of the appended claims and their equivalents.

## Claims

1. A contamination prompt structure for a filter medium, comprising:
a filter element, and
a prompt assembly, wherein:
the prompt assembly comprises a movable part, one end of the movable part is in communication with a water inlet of the filter element, or a water outlet of the filter element, another end of the movable part is in communication with the other one of the water inlet of the filter element and the water outlet of the filter element, or outside air,
when the filter element is in a contaminated state, a rise of pressure at the water inlet or a drop of pressure at the water outlet drives the movable part to move to send a prompt for a user to replace the filter element, wherein the prompt assembly comprises a housing, an elastic body, a valve core, and an elastic bladder, and the valve core is disposed at a movable end of the elastic bladder to form the movable part.

2. The contamination prompt structure according to claim 1, wherein one side of the elastic bladder facing away from the movable end of the elastic bladder is in communication with the water inlet of the filter element.

3. The contamination prompt structure according to claim 1 or 2, wherein the elastic bladder and the valve core are disposed in the housing.

4. The contamination prompt structure according to any preceding claim, wherein one end of the elastic body is fixedly connected to an inner wall of the housing and the other end of the elastic body abuts the moveable end of the elastic bladder.

5. The contamination prompt structure according to any preceding claim, wherein the valve core comprises a recess which receives a protrusion of the elastic bladder.

6. The contamination prompt structure according to any preceding claim, wherein the housing further comprises an exhaust hole in communication with outside air.

7. The contamination prompt structure according to any preceding claim, wherein the housing comprises an observation window for observing a position of the valve core.

8. The contamination prompt structure according to any of claims 1 to 6, wherein the housing is made of an optically translucent material for observing a position of the valve core.

9. A filter device having a replaceable filter element, comprising:
a housing having an interior adapted to receive the replaceable filter element, a water inlet in fluid communication with the interior, and a water outlet in fluid communication with the interior, the replaceable filter element being positionable in the interior so that water received through the water inlet of the housing passes through the replaceable filter element to reach the water outlet of the housing; and
a prompt assembly comprising a movable part, one end of the movable part is in fluid communication with one of the water inlet and the water outlet and the other end of the movable part is in fluid communication with the other one of the water inlet and the water outlet or outside air, the movable part provides an indication of a condition of the replaceable filter element, wherein the prompt assembly comprises a prompt housing, an elastic body, a valve core, and an elastic bladder, and the valve core is disposed at a movable end of the elastic bladder to form the movable part.

10. The filter device according to claim 9, wherein one side of the elastic bladder facing away from the movable end of the elastic bladder is in communication with the water inlet of the filter element.

11. The filter device according to claim 9 or 10, wherein the elastic bladder and the valve core are disposed in the prompt housing.

12. The filter device according to any of claims 9 to 11, wherein one end of the elastic body is fixedly connected to an inner wall of the prompt housing and the other end of the elastic body abuts the moveable end of the elastic bladder.

13. The filter device according to any of claims 9 to 12, wherein the valve core comprises a recess which receives a protrusion of the elastic bladder.

14. The filter device according to any of claims 9 to 13, wherein the prompt housing further comprises an exhaust hole in communication with outside air.

15. The filter device according to any preceding claim, wherein the prompt housing comprises an observation window for observing a position of the valve core.
